(19) Europäisches Patentamt
European Patent Office
Office européen des brevets

(11) Publication number: 0 353 723 A2

# (12) EUROPEAN PATENT APPLICATION

(21) Application number: 89114224.2

(51) Int. Cl.4: G03B 7/08 , G03B 17/18

(22) Date of filing: 01.08.89

(30) Priority: 01.08.88 JP 102115/88
19.08.88 JP 108998/88
25.08.88 JP 111412/88

(43) Date of publication of application:
07.02.90 Bulletin 90/06

(84) Designated Contracting States:
AT BE CH DE ES FR GB GR IT LI LU NL SE

(71) Applicant: ASAHI KOGAKU KOGYO KABUSHIKI KAISHA
36-9, Maeno-cho 2-Chome Itabashi-ku
Tokyo(JP)

(72) Inventor: Kobayashi, Takeo c/o Asahi Kogaku Kogyo K. K.
26-36-9, Maeno-cho
Itabashi-ku Tokyo(JP)
Inventor: Numako, Norio c/o Asahi Kogaku Kogyo K. K.
26-36-9, Maeno-cho
Itabashi-ku Tokyo(JP)
Inventor: Tabata, Yasushi c/o Asahi Kogaku Kogyo K. K.
26-36-9, Maeno-cho
Itabashi-ku Tokyo(JP)
Inventor: Nagai, Katsutoshi c/o Asahi Kogaku Kogyo K. K.
26-36-9, Maeno-cho
Itabashi-ku Tokyo(JP)

(74) Representative: Schaumburg, Thoenes & Englaender
Mauerkircherstrasse 31 Postfach 86 07 48
D-8000 München 80(DE)

## (54) Electronically controlled camera.

(57) An electronically controlled camera which is controllable by an external control unit connected to terminals provided on a camera body. The terminals are connected to signal lines arranged between more than one control units built in the camera body. One sends a predetermined unrequired data to the other one of the control units through the predetermined signal line.

This data can be externally monitored. Further, a predetermined photographing data is indicated on a indicator unit of the camera under predetermined conditions. The aboves are all alone for inspecting whether electronical control system works well or not.

EP 0 353 723 A2

Fig. 5

111
112
wind motor
zoom motor
110
motor drive circuit
120
date module
33, 34
green lamp red lamp
32
LCD
22
strobe circuit
210
shutter
23
photometry
CdS
24
distance measurement
IRED
PSD
SP- SIOA TRG
PORT 5
PORT 4
Main CPU
PORT 7
PORT 6
PORT 3
PORT 2
PORT 1
PORT 0
SICS
CLK
sub CPU
100
200
SWMode
SWW
SWT
SWS
POS
DX contact
SWR
SWWP
SWL
SWF
SWB
SWMacro
clock oscillator
101
battery check circuit
220
clock oscillator
201

# Electronically Controlled Camera

## Background of the Invention

The present invention relates to an electronically controlled camera.

Nowadays, electronically controlled cameras incorporating a CPU (Central Processing Unit) therein are increasingly prevailing. In electronically controlled cameras of this type, the CPU executes the controls required for camera operation such as light intensity measurement, distance measurement, zoom lens driving, film winding, rewinding, indication on a LCD (Liquid Crystal Display) panel.

Taking an example of zoom lens movement, when a TELE switch is operated, a zoom motor is rotated forward to pull a zoom lens toward a TELE extremity, while with a WIDE switch operated, the zoom motor is rotated in reverse to withdraw the zoom lens to a WIDE extremity. Also, when a main switch is operated after a back cover is closed with a film cartridge seated inside the camera, automatic loading takes place as a black-shot film advancing operation.

Further, each time a shutter is operated, a film is automatically wound to be pulled out of the film cartridge. When a certain number of film frames are wound, a wind-up motor is rotated in reverse to allow the film automatically to be wound up on the film cartridge.

As to indications, shutter speed, number of film frames taken, lens focal length and battery capacity are indicated on the LCD panel. A viewfinder indicates a strobe flash mode with a red lamp turned on, a strobe charge on with the red lamp blinking, a focus lock with a green lamp turned on, and a short distance warning with the green lamp blinking.

When fabricating and inspecting the camera of this type, it is necessary to perform inspection to check if the camera is able to carry out desired operations. In such operation checks, it has been necessary to actually use the camera, or to start a dedicated operation test program stored in the CPU in advance. An extensive labor has thus been required for inspection works, which is not desirable in view of the inspection process.

## Summary of the Invention

It is therefore an object of the invention to provide an improved electronically controlled camera which is easy for inspection.

In order to achieve the foregoing object, according to one aspect of the invention, there is proveided an electronically controlled camera comprising:
control means for controlling camera function;
input means for a inputting a control signal to said control means; and
terminal means, to which an external controller is connected for inputting an external control signal to said control means;
wherein said control means disables said input means when said external control signal is input through said terminal means and controls said camera function in accordance with said external control signal via said control means.
cording to another aspect, there is provided an electronically controlled camera comprising:
more than one control means;
more than one signal lines interconnected between said control means for data exchange; and
terminal means to which an external unit is connected, said terminal means being connected to one of said signal lines, wherein one of said control means sends at least one predetermined data to the other one of said control means through said one of the signal lines, said data being the data which is not required by said other one of the control means.

According to a further aspect, there is provided an An electronically controlled camera comprising:
measuring means for measuring photographing data varying in dependence on external environments;
Dx code input means reading a Dx code provided on a film cartridge.
film detecting means for checking if a film is loaded with its front end drawn out of the film;
indicator means for visibly indicating said photographing data; and
control means for incicating said photographing data measured by said measuring means on said indicator means when said Dx code input means inputs a predetermined Dx code and said film detecting means detects that the film is not drawn out of the film catridge.

Description of the Accompanying Drawings

Figs. 1 through 4 show the external appearance of the camera embodying the invention, wherein Fig. 1 is a front view, Fig. 2 a plan view, Fig. 3 a rear view, Fig. 4 a rear view with the back cover open;

Fig. 5 is a block diagram showing the control system of the camera;

Figs. 6 through 9 are flow charts showing operation of the main CPU of the camera, wherein Fig. 6 shows the main flow, Fig. 7 a flow of external control, Fig. 8 a flow of serial signal input/output, and Fig. 9 is a flow of command code processing;

Fig. 10 is a block diagram of an image plane exposure quantity inspection unit;

Fig. 11 is a flow of the image plane exposure quantity inspection;

Fig. 12 is a flow of camera control processing;

Fig. 13 is a timing chart for explaining data transfer between the CPU of the camera and the external controller;

Fig. 14 is a flow explaining data transfer shown in Fig. 13;

Fig. 15 is a flow explaining operation inspection of the camera;

Fig. 16 is shows a main flow disclosing the instructions relating to another inspection system;

Fig. 17 is a flow for light measuring, distance measuring and shutter-release processings;

Fig. 18 is a flow chart showing data input output at the main CPU;

Fig. 19 is a flow chart showing operation of the sup CPU of teh camera;

Fig. 20 is a flow chart showing serial signal input output at the sub CPU;

Figs. 21 and 22 are timing charts showing the timing of data input output;

Fig. 23 is a flow chart illustrating operation of the monitor unit for inspection of the camera; and

Fig. 24 shows a AEAF flow relating to the third inspection system.

Description of the Embodiments

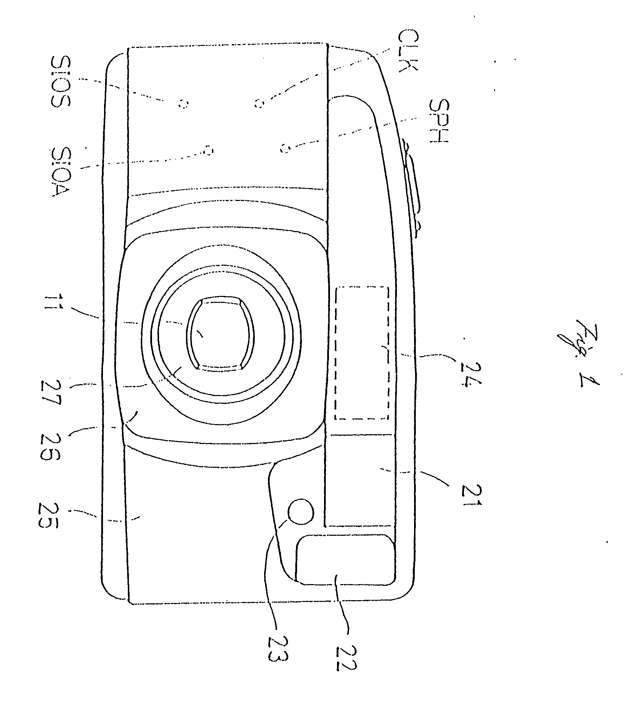

The camera illustrated in Figs. 1 through 4 is a compact lens shutter camera in which a taking lens (zoom lens) 11 and a finder system 21 are installed independently. On the front, a strobe 22, a photometric AdS cell 23, and a distance measurement unit 24 are installed. The taking lens 11 is supported by a movable lens barrel 27, which will come out as required, installed in a fixed lens barrel 26 secured to a camera body 25.

Also, inside the grip part of a surface cover, as shown on the left of Fig. 1, four terminals, SPH, CLK, SIOA and SIOS, which are explained later, are provided for external connections.

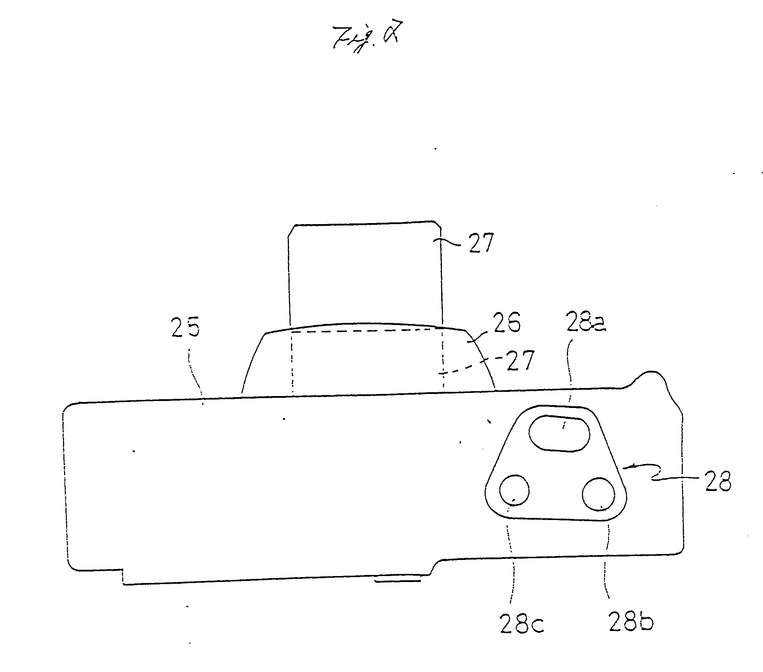

The position of the movable lens barrel 27 changes between its retracted position illustrated by the broken line and its extended position illustrated by the solid line in Fig. 2 to vary the focal length of the taking lens 11.

Also, on top, a shutter button 28 which is also used as a zoom button is provided. This shutter button 28 has a triangular shape and the front of button 28a is a two-step switch incorporating a photometric switch and a shutter release switch which will be described later, one end of the rear of button 28b is a zoom-tele switch and the other end of the rear of button 28c is a zoom-wide switch. These three portions 28a, 28b and 28c can be operated independently so that, when one of them is in operation, the other two cannot be operated.

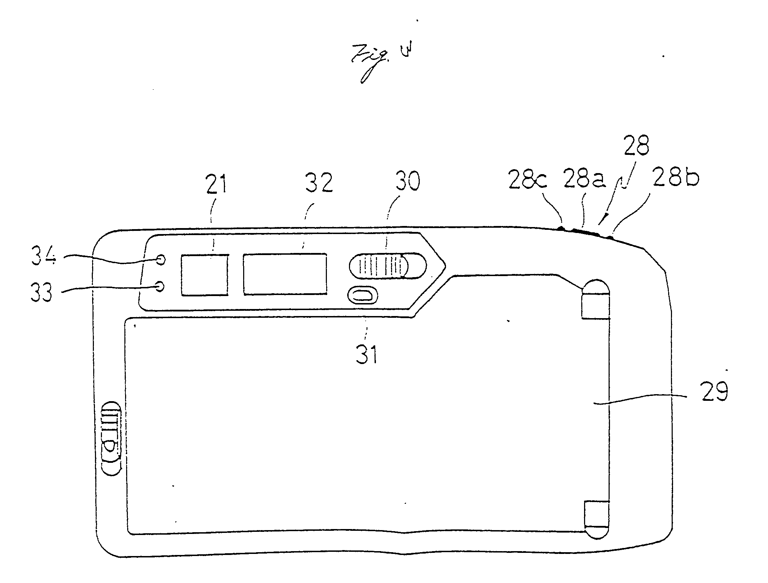

On the back of the body 25, as shown in Fig. 3, a main switch 301 a mode button 31 and a LCD panel 32 are provided on the upper portion of a back cover 29. The main switch 30 is a slide switch which has three positions and operates as a lock switch and a macro switch which are described later.

By the side of the finder 21, a red indicator lamp 33 for indication of strobe information and a green indicator lamp 34 for indication of distance measurement information are arranged.

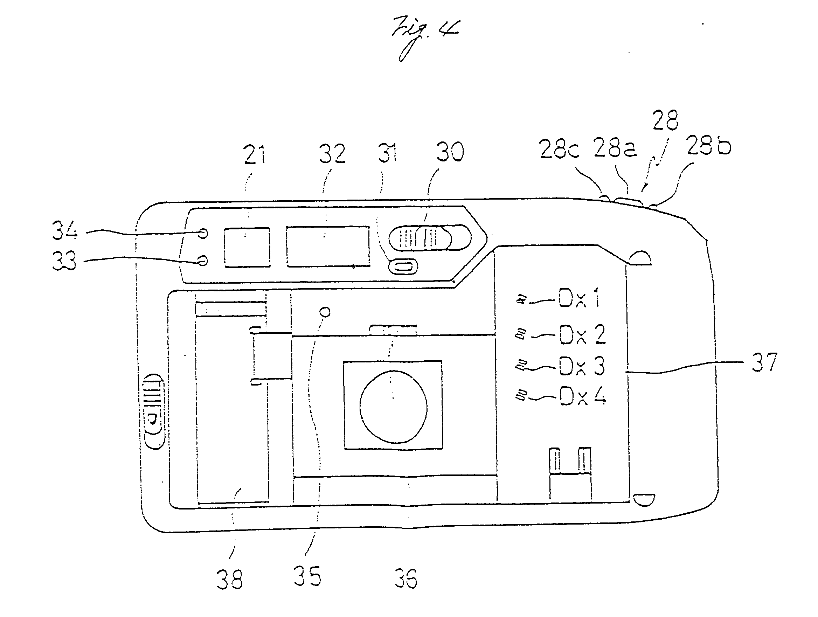

Moreover, with the back cover 29 opened, as shown in Fig. 4, an actuating member 35 to turn on and off a film switch to be described later which checks if a film exists or not, and a roller 36 which rotates upon running of the film are provided above an aperture. In a film cassette chamber 37 in which a film cartridge is seated, four sets of Dx contacts Dx1, Dx2, Dx3 and Dx4, each set of which comprises two electrodes, are provided. Dx1 is a ground contact, and ISO 25 through 3200 is detected by dividing it into 8 different zones with 3-bit signals from the other three sets of contacts.

It operates using a Dx code input system which reads the Dx code. The ON/OFF status of each contact and ISO sensitivity are shown in Table 1.

Table 1

| Dx4 | Dx3 | Dx2 | ISO |
|---|---|---|---|
| OFF | OFF | OFF | 25 |
| OFF | OFF | ON | 50 |
| OFF | ON | OFF | 100 |
| OFF | ON | ON | 200 |
| ON | OFF | OFF | 400 |
| ON | OFF | ON | 800 |
| ON | ON | OFF | 1600 |
| ON | ON | ON | 3200 |

Reference numeral 38 indicates a spool axis to wind thereon a film drawn from the film cartridge.

This camera automatically detects the variation of the focal length of the taking lens 11, the open F-value which changes according to the above variation and the position change of the lens 11 among the wide extremity, the tele extremity, the MACRO position for short-distance photography and the LOCK position, then carries out various controls according to these data.

For the aboves, a code plate is attached around a cam cylinder for lens movement, and several brushes which contact the code plate is arranged on the camera body. The information detected by the conducting conditions of these terminals is output as a position code POS.

In this camera, the focal length and the F-number of the taking lens 11 are set to 38 mm F4.5 - 60 mm F6.7, and the lens position detected from the position code POS is devided into fifteen steps of OH - EH. Here, "H" stands for hexadecimal and will be used for indication of the data to be described later.

When POS = 0, the movable lens barrel 27 is retracted in the fixed lens barrel 26 and it is in the LOCK position where the front of the taking lens 11 is covered by a barrier, not illustrated. POS = 2H - CH means the zoom range and POS = EH means the MACRO position for short-distance photography. Stopping of the lens 11 in the ranges between the LOCK position and zoom range (POS = 1H) and between the zoom range and the MACRO position (POS = DH) is inhibited.

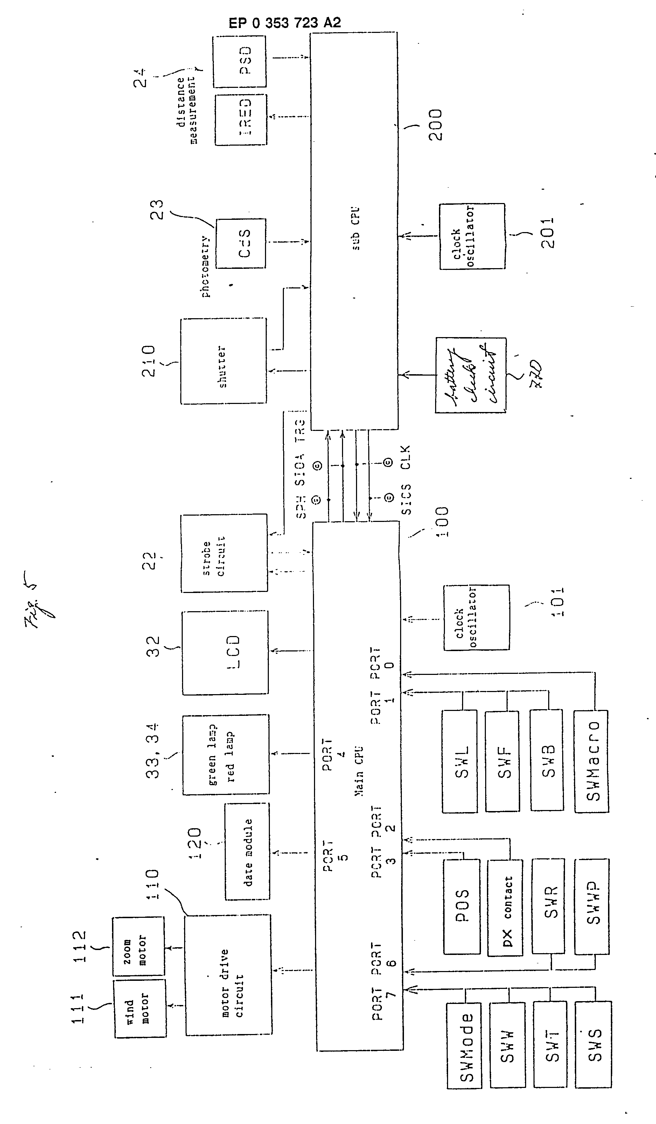

The control unit of this camera will be explained referring to Fig. 5.

A main CPU 100 is a core of this control unit and a sub CPU 200 is connected to the main CPU 100 via four signal lines, SPH, CLK, SIOA and SIOS, for shutter-related processings.

Each signal line has a terminal which can input and output signals to and from exterior of the camera. Signals taken from each terminal during executing data transfer between the main CPU 100 and the sub CPU 200 have the following meanings.

SPH is a signal for the main CPU 100 to enable the sub CPU 200. Operation will start with "L". CLK is a clock signal for transferring serial data which the sub CPU 200 outputs. SIOA is a signal for transferring serial data from the main CPU 100 to the sub CPU 200 and SIOS is a signal for transferring serial data from the sub CPU 200 to the main CPU 100. These terminals are also used for input and output of data and commands with an external unit during externally-controlled processings to be described later.

These data and commands are all input and output as 8 bit serial signals in synchronism with CLK.

As long as there is a battery in the camera, the main CPU 100 operates all the time in synchronism with the clock from the clock generating circuit 101, and controls other circuits in dependence on the switch input detected or the state of the camera.

When to be controlled are a motor drive circuit 110 for driving a winding motor 111 and a zoom motor 112, a date module 120 connected with PORT 5, a red indicator lamp 33 and a green indicator lamp 34 connected with PORT 4, the LCD panel 32, and the strobe 22.

As for switches;

(1) Macro switch SWM which will be ON when the slide lever of the main switch 30 is set to the MACRO position;

(2) Battery switch SWB for checking if a battery is present or not;

(3) Film switch SWF turned ON and OFF by the operating member 35 pushed by the film;

(4) Lock switch SWL which will be ON when the slide lever of the main switch 30 is set to the LOCK position;

(5) Wind pulse switch SWWP generating pulses in response to rotation of the roller 36 due to film traveling;

(6) Release switch SWR which will be ON when the front part 28a of the shutter button 28 is twice pressed;

(7) Photometric switch SWS which will be ON when the front part 28a of the shutter button 28 is once pressed;

(8) Zoom tele switch SWT which will be ON when the one end part 28b of the shutter button 28 is pressed;

(9) Zoom wide switch SWW which will be ON when the other end part 28c of the shutter button 28 is pressed; and

(10) Mode switch SWMode which can be switched between forced strobe flash and automatic flash by pressinsg the mode button 31.

Of these switches, (1) is connected to PORT 0 of the main CPU 100 and, (2) through (4) to PORT 1, (5) and (6) to PORT 6 and (7) through (10) to PORT 7.

Furthermore, Dx contact for input of Dx code is connected to PORT 2 of the main CPU 100, and the position code POS is sent to PORT 7 from the brushes in slide contact with a code plate 13.

On the other hand, when the power is supplied to the sub CPU 200 by the SPH "L" signal which is output from the main CPU 100, the sub CPU 200 will start operation in synchronism with the clock of a clock oscillation circuit 201 and performs the photometric, distance measurement and shutter-related processings while exchanging the signals with the main CPU 100. This sub CPU 200 controls a shutter block 210, a bettery check circuit 220, the photometric CdS cell 23 and the distance measurement unit 24, and also generates the trigger pulse TRG for the strobe 22 in synchronism with shutter release.

As for the shutter block, for example, as described in Japanese Patent Provisional Publication Sho 60-225122, the unit which carries out focusing and shutter release by the built-in pulse motor is employed.

Also, the distance measurement unit 24 has a well- known structure and is constructed with an infrared emitting diode IRED to emit light on a photographing subject and a position sensor PSD to receive light reflected from the accordance with a trigonometrical calculation.

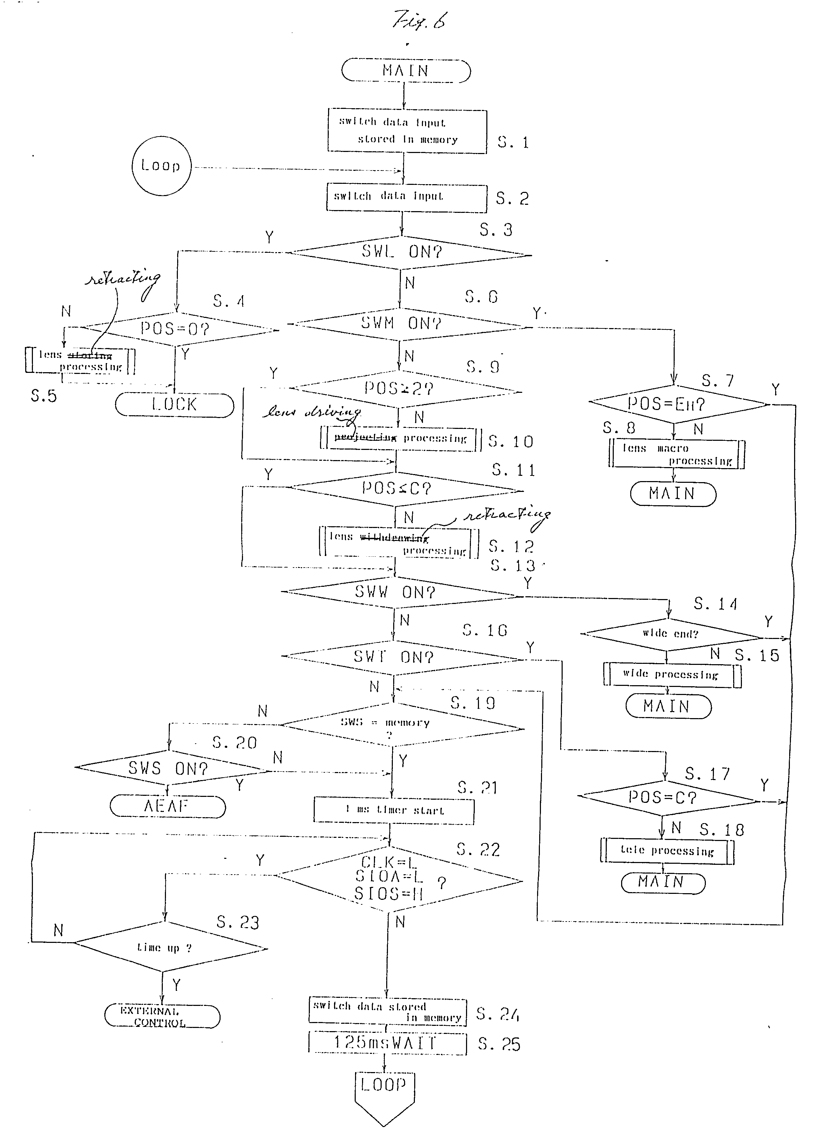

Next, according to the flow charts shown in Figs. 6 through 10, the programs executed by the above-mentioned main CPU 100 will be explained.

<MAIN>

Fig. 6 shows a main flow which provides basic operations of the camera. Other operations are those diverged from the main flow or those executed as called by the main flow according to various conditions.

The main CPU 100 inputs the condition of each switch which was described before and stores the detected results in memory at step 1 (hereinafter referred as S.1).

Then, at S.2, the conditions of switches are input again. This is to detect dynamic changes in switches by comparing data with the data stored at S.1.

At S.3, the condition of the lock switch SWL is checked according to the switch data input at S.2. The camera is held in an non-use state, when the lock switch SWL is ON. In this case, whether the position code POS is "0" or not is checked at S.4. This is to check if the taking lens 11 is in the lock position. When it is in the lock position, the processing advences to Lck Flow. When the lock switch SWL is in the state ON, in teh Lock Flow, the zooming, photometric measurement, distance measurement and release operations are inhibited.

When the lens 11 is not in the lock position, the lens retractomg process to retract the taking lens 11 in the lock position is executed at S.5.

When the lock switch SWL is OFF, the following preparation processes for taking a photograph are carried out.

First, the condition of the macro switch SWMacro is checked at S.6. When the macro switch SUMacro is ON, the taking lens 11 has to be at the macro position for short-distance photography. Accordingly, whether the value of the position code POS is EH or not is checked at S.7. When POS = EH, taking lens 11 is already in the macro position, therefore, the processing advances to S.19.

When POS ≠ EH is judged at S.7, Lens Macro Processing is executed to move the lens out at S.8, then the processing returns to the start of the main flow.

When the macro switch SWMacro is judged OFF at S.6, as the taking lens 11 has to be in the range of POS = 2H - CH, that is the zoom area, whether the position code POS is over 2H or not is checked at S.9. Then, if POS is under 2H (POS = 0H or 1H), the taking lens 11 in the lock position or on the border of the lock position and the zoom area. Therefore, Lens Drive Process wherein the lens is moved out until POS = 2H is executed.

Next, whether the position code POS is CH or below CH is checked at S.11. When POS is over CH, the taking lens 11 is in the macro position or on the border of the macro position and the zoom area. Therefore, Lens Retracting Process wherein the lens is moved back to the POS = CH position is executed.

When the lens 11 is in the zoom area or is moved to the zoom area by the above S.10 or S.12, the state of the zoom wide switch SWW is checked at S.13.

When this switch SWW is ON, whether the taking lens 11 is at the wide extremity or not is checked at S.14. When the taking lens is already at the wide extremity, the lens 11 cannot move any further to the wide side. Therefore, the processing goes to S.19. When the lens 11 is not at the wide extremity, the lens 11 is moved to the wide extremity at S.15 (wide processing). In the Wide Peocessing, lens movement steps when the wide switch SWW is turned OFF or the lens 11 reaches to the wide extermity, then the processing returns to the start of the main flow.

When the wide switch SWW is judged OFF at S.13, the state of the zoom tele switch SWT is checked at S.16.

When the tele switch SWT is ON, whether the position code POS is CH or not is checked at S.17. When POS is CH. the taking lens 11 is already at the tele extremity where the focal length is 60 mm. Therefore, the processing jumps to S.19, samely as mentioned earlier.

When POS is not CH, the Tele Processing to move the lens to the tele extremity is exesuted at S.18. In the Tele Processing, lens movement stops when the tele switch SWT is turned OFF or the lens 11 reaches the tele extremity, then the processing returns to the start of the main flow.

When both of the zoom tele and wide switches SWT, SWW are not ON, the change of the state of the photometric switch SWS is checked at S.19 and S.20, then the processing goes to AEAF operation to execute photometric, distance measurement and shutter release processings when the photometric switch SWS turns from OFF to ON.

When there is no state-change of the photometric switch SWS or when it changes from ON to OFF, a 1 ms timer is set and started at S21.

In S22, the main CPU 100 detects levels of CLK, SIOA, SIOS and if CLK = L, SIOA = L, SIOS = H, it determines that a signal has been entered to start external control, processing then going to S23. This state continues until the time for 1 ms is up, and thereafter the main CPU 100 goes to External Control Flow.

SIOS, CLK are "H" and SIOA is "L" when processing is executed according to the main flow. If CLK is now forcibly turned to "L" from outside, the camera is designed to recognize that this is an external control mode. It should be noted that 1 ms waiting is done to prevent error operation due to external noises.

If judgment in S22 is negative from the beginning, or it is turned to negative before time up, switch data in memory are rewritten to the data entered in S2 and, after stopping the processing for 125 ms in S25, processing loops to S2 for further execution.

((External Control))

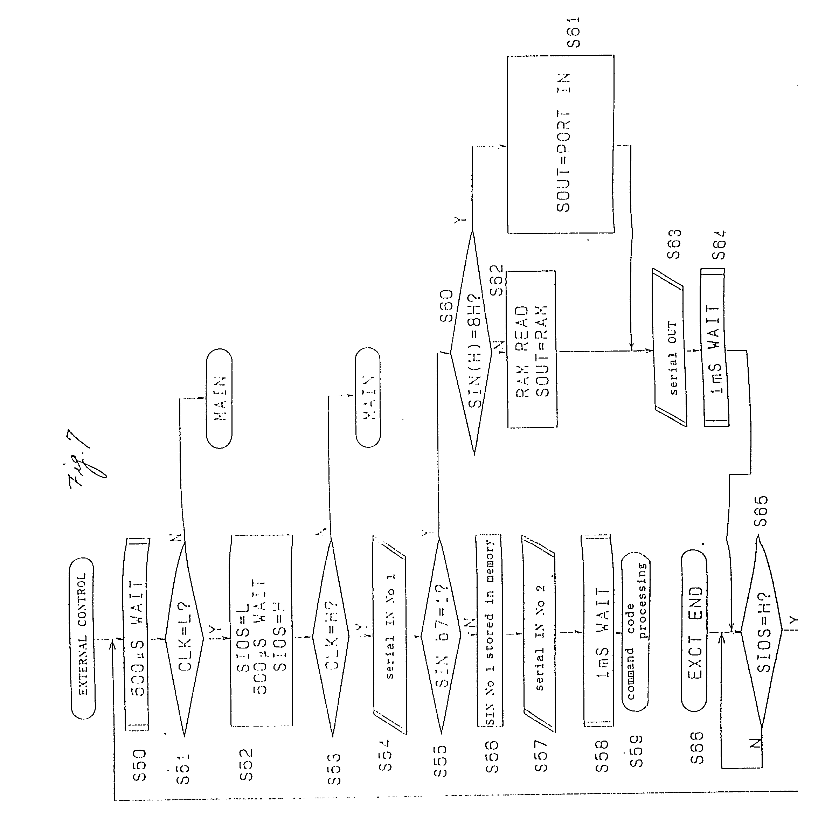

Operation of the camera when the CPU 100 enters the external control mode will be described with reference to Fig. 7.

When external control starts, the main CPU 100 executes data input and output with an external controller to be described later via CLK and SIOS signal lines. Such input and output signals consist of two sets of 8-bit serial signals.

The first 8 bit serial signal is a signal which the camera receives from the external controller, according to which it is determined whether the second 8 bit serial signal is defined as an output of the information owned by the camera to the external controller or as a control command from the external controller to the camera.

The first and second serial signals are concretely shown in Table 2 and Table 3.

Table 2 shows an output mode state where the second serial signal as an output from the camera, the first serial signal being SIO IN 1 and the second serial signal SIO OUT. Table 3 shows an input mode state with the second serial signal as a control command for the camera, the first serial signal being SIO IN 1 and the second serial signal SIO IN as in Table 2.

Table 2

| Input mode<br>SIO IN 1 SIO OUT<br>7654 3310 7654 3210 | |
|---|---|
| [PORT READ] | |
| 1000 0000 XXXX dddd | PORT 0 READ:SWMacro |
| 0001 XXXX dddd | PORT 1 READ:SWB, SWF, SWL |
| 0010 XXXX dddd | PORT 2 READ:Dx code |
| 0011 XXXX dddd | PORT 3 READ: Zoom code |
| 0110 XXXX dddd | PORT 6 READ:SWWP, SWR |
| 0111 XXXX dddd | PORT 7 READ:SWS,SWT,SWW,SWMode |
| [RAM READ] | |
| 1aaa aaa0 dddd dddd | aaa aaa0: 10-7E |
| | dddd(b7-b4):Add+1 DATA |
| a: address d: data | dddd(b3-b0):Add DATA |

Table 3

| Output mode<br>SIO IN 1 SIO IN 2<br>7654 3310 7654 3210 | |
|---|---|
| [Shutter Control] | |
| 0001 1010 XXXX XXXX | NOMAL released |
| 1011 XXXX XXXX | Distance and light measure only, not released |
| 100X XXXX XXXX | Distance and light measure passed and released |
| 1110 XXXX XXXX | Exposure amount test (Dx ignored) |
| [RAM WRITE] | |
| 0010 dddd aaaa aaaa | aaa aaa: Add 00-FF dddd:DATA<br>aaaa aaaa=00-FF:RAM Add=000-0BF<br>aaaa(b7-b4)=C-F:<br>RAM Add=1E+aaaa(b3-b0) |

| | |
|---|---|
| [Output Control] | |
| 0011 0XXX 111X 000X | Initial value |
| 011X 001X | WIND MOTOR forward |
| 110X 100X | WIND MOTOR reverse |
| 110X 010X | ZOOM MOTOR forward |
| 111X 001X | ZOOM MOTOR reverse |
| 1XXX XXXd dddX | PORT 5,4 OUT<br>XXXd dddX<br>b4:DTRG b3:RLMP b2:GLMP b1:SPH |
| [Operation Control] | |
| 100 0000 XXXX dddd | MOVE POS: dddd=POS(0-E) |
| 0001 XXXX XXXX | INT POS: POS initilize |
| 0011 XXXX XXXX | TSTREW: rewind start |
| 0100 XXXX XXXX | TSTLD: loading start |
| 0101 XXXX XXXX | TSTWD: wind start |

The output mode and the input mode are distinguished by bit 7 of the first serial signal SIO IN 1 and the main CPU 100 of the camera executes processing in the output mode when bit 7 is 1 and in the input mode when bit 7 is 0.

In Fig. 7, the CPU 100 examines whether or not CLK is "L" in S51 after stopping processing for 500 μs in S50. It determines that, when CLK is "H", the camera is not externally controlled and advances to the start of the main flow.

If CLK is "L", the main CPU 100 defines SIOS as "L"n S52, then turning it to "H" again after 500 μs. It then examines whether or not CLK is "H" in S53. It determines as the camera is externally controlled when CLK is "L2" and goes to the main flow. If it is "H", input of the first serial signal SIO IN 1 is effected subsequently.

Since it is a prerequisite for starting this processing that SIOS is "H", a 500 μs pulse is generated at "L" of SIOS by virtue of the processing in S52.

Thus, the external controller is allowed to perform camera control when this pulse is detected and CLK initially set at "L" level is shifted to "H" level. The camera accepts external control only when such synchronization is effected.

In S54, the first serial signal SIO IN 1 is transferred from the external controller to the camera.

It is examined in S55 whether or not the bit 7 of the first serial signal received is 1. As stated above, the state in which the bit 7 is 0 corresponds to the input mode in which a control command is sent from the external controller to the camera as the second serial signal. In this case, the main CPU 100 stores the first serial signal in memory in S56 so that it can be used for later checking. The second serial signal is again input in S57. After this input processing, the processing is stopped for 1 ms in S58 and thereafter, processing goes to the command code processing to be described later via S59.

When the bit 7 of the first serial signal is determined as 1 in S56, this state corresponds to the output mode in which a data is sent from the camera to the external controller as a second serial signal. In this case, it is examined in S60 whether or not high nibbles, i.e., higher-order 4 bits of the first serial signal are 8H. 8H here is the binary code which corresponds to "1000".

As shown in Table 2, the case where the high nibbles of the first serial signal are 8 corresponds to the mode of PORT READ in Table 2. In this case, the data at a port specified by the lower-order 4 bits of the first serial signal are set to in S61 as the lower 4 bits of the second serial signal SIO OUT.

If high nibbles of the first serial signal are not 8, the data at an address specified by the bit 6 - the bit 1 of the first serial signal are set as the lower 4 bits of the second serial signal SIO OUT, while the higher-order address data at the specified address are also set as higher-order 4 bits. This enables reading a RAM data at addresses 10H to 7FH.

In S63, the data set in S61 and S62 is generated as the second serial signal. The external controller is allowed to detect the state of the camera by reading this data.

After the above processing, the main CPU 100 stops the processing for 1 ms in S64 and advances to S50 after it finds SIOS turned to "H" in S65.

It is noted that some of the external control end terminals [EXCT END] indicated in S66 diverges from the command code processing to be described later has been finished.

(( Serial Input Output))

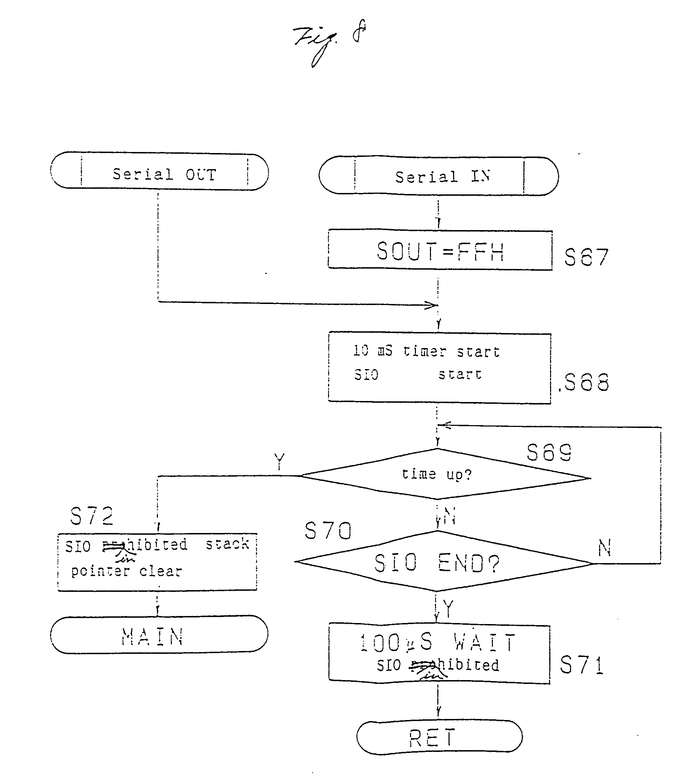

Fig. 8 illustrates in more detail about the data input/output processing between the camera and the external controller executed in S54, S57 and S63 in the external control processing as mentioned above.

First, in case of the serial signal input processing "Serial IN" done in S54 and S57, the serial output data is set to FFH in S67, and the main CPU 100 sets the 10 ms timer in S68 to permit (start) serial input/output operation.

In case of the serial output processing "Serial "OUT" in S63, the main CPU 100 sets the 10 ms timer in S68 and permits output of the serial output data set in S51.

S69 checks for time up of the timer set and if the timer is not up yet, it is examined in S70 whether or not the serial input/output has been finished. If input/output is finished before time up, the main CPU 100 stops the processing for 100 μs in S71 and inhibits the serial input/output, then returning to the External Control Flow for further processing.

If the time is up before finishing the input/output, the serial input/output is inhibited in S72, while a stack pointer is cleared to restore the nesting level of the subroutine, the processing then returning to the main flow for further processing.

(( Command Code Processing))

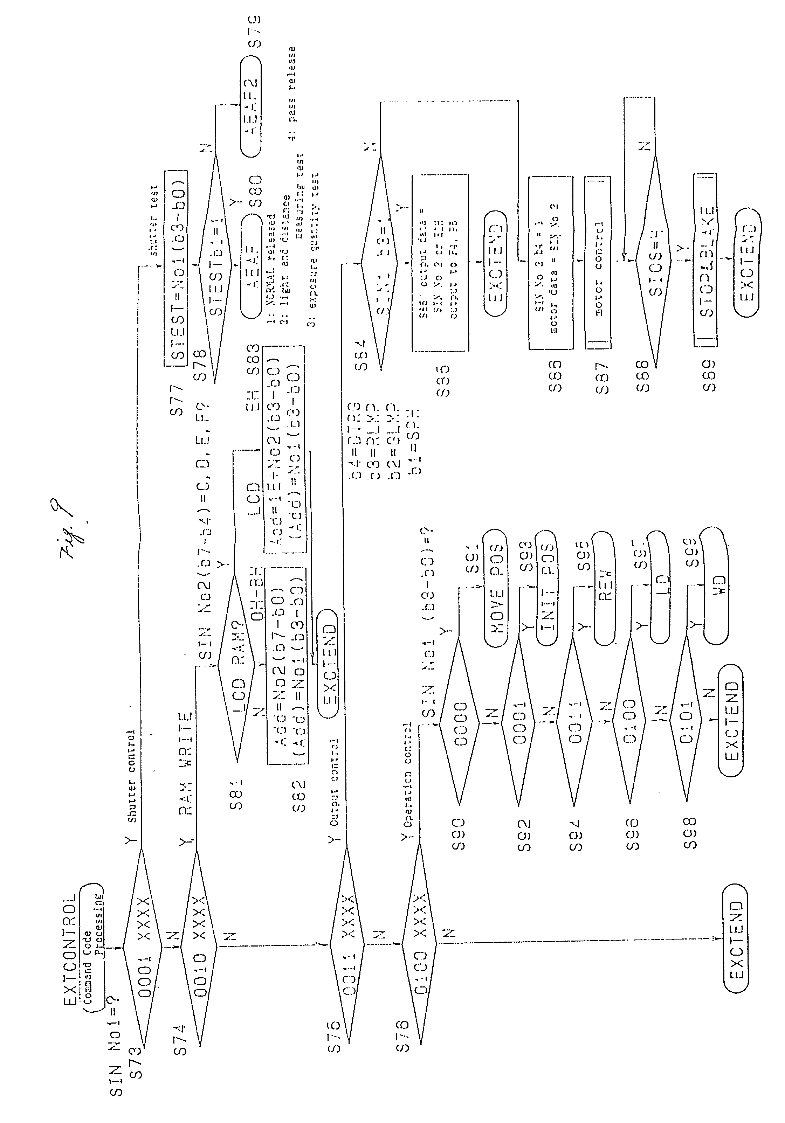

Fig. 9 shows what processing is executed by the signal actually received from the external controller. This flow will be described with reference to Table 3.

Left-hand S73 through S76 in this flow are all for checking the higher-order 4 bits of the first serial signal SIO in 1. They are checked successively from high-order to low-order to allow the CPU 100 to determine which out of the four stages of control shown in Table 2 is requested by the external controller for the camera.

First, the higher order 4 bits being 1H indicates the case where Shutter Control Processing is requested. In this case, the lower order 4 bits of the first serial signal are to be stored in the STEST register in S74.

It is examined in S77 whether or not the bit 1 of the above 4-bit data is 1. The bit 1 is turned to 0 in response to a command to effect shutter-release without performing light and distance measurements, as shown in the shutter control column in Table 3. In this case, processing diverges in S79 to AEAF2 Flow which effects shutter-release only. If the bit 1 is 1, it goes to AEAF Flow. In this flow, the bit 0 and the bit 2 of STEST are checked, though detailed description of the AEAF Flow is omitted herein. If the bit 0 is 1, the processing return to the main flow after executing light and distance measurements without effecting shutter-release. If the bit 2 is 1, shutter-release is effected regardless of state of the release switch SWR, ignoring strobe control processing and release lock processing, so as to conduct an exposure quantity test to be mentioned later.

If the result in S73 is negative, it is examined in S74 whether or not the higher order 4 bits of the first serial signal is 2H. If the result is affirmative, RAM WRITE processing is executed.

The address in the RAM to which the data is to be written is represented by a three-digit hexadecimal indication and is determined by a 8 bit data of the second serial signal.

The second serial signal SIO IN 2 is within the range between OOH and FFH. If the higher order 4 bits are O through B, that is OOH through BFH, the address in question is given within the range between OOOH and OBFH with the highest order digit set at 0.

If the higher order 4 bits of the second serial signal SIO IN 2 are CH through FH, the higher 2 digits are fixed at 1E, while the lowerst order digit is determined by the lower 4 bits of the second serial signal SIO IN 2, so that the address is specified within the range of 16, i.e., between 1EOH and 1EFH. This range is provided to store a data for driving the LCD panel.

The processings in S81 through S83 represents specifying the address mentioned above. It is first examined in S81 whether or not the address specified by the higher order 4 bits of the second serial signal is within the data area for driving the LCD panel. If it is negative, the data sent by the lower order 4 bits of the first serial signal is written into the address specified by the 8 bit of the second serial signal. In S83, the data sent by the lower order 4 bits of the first serial signal is written into the address specified in the range between 1EOH to 1EFH.

Upon completion of writing, the processing goes in each case to S66 in External Control mentioned above, in which it is checked whether control is to be executed again.

In S75, it is examined whether or not the higher order 4 bits of the first serial signal SIO IN 1 are 3H, and if it is affirmative, output control in Table 3 is to be executed.

In S84, it is first examined whether or not bit 3 of the first serial signal SIO IN 1 is 1. If it is 1, the main CPU 100 gives, in S85, outputs to its own PORTS 4 and 5 in accordance with the 4 bit data from the bit 4 to the bit 1 of the second serial signal. Thereafter, processing goes to S66 for External Control.

Thus, the bit 4 is to control a date trigger output to the date module, the bit 3 turning ON and OFF the red lamp, the bit 2 turning ON and OFF the green lamp, the bit 1 output of the SPH signal representing operation start for the sub CPU 200.

When the bit 3 of SIO IN 2 is determined to be 0 in S84, the bit 4 of the second serial signal is set at 1 in S86 and data of the bit 7 - the bit 5 and the bit 3 - the bit 1 is set as a motor data shown in Table 2. In S87, forward reverse rotation processing of the zoom motor and the wind motor is executed in accordance with the data set.

This processing continues until a motor stop and brake is executed in S89 because of the judgement of SIOS = "H" in S88. When the motor control processing is completed, processing goes to S66 for External Control in the same manner as mentioned above.

If answers in S73 through S75 are all negative, it is examined in S76 whether or not the higher order 4 bit of the first serial signal is 4H.

If it is 4H, operation controls listed in Table 2 start. Here determined is the processing to be executed in accordance with the value of the lower order 4 bits of the first serial signal SIO IN 1.

If in S90 the lower order 4 bits of the first serial signal SIO IN 1 are determined as OH, POS moving processing "MOVE POS" is executed in S91. This processing is done to move the taking lens 11 to the position corresponding to POS specified by the lower order 4 bits of the second serial signal SIO IN 2.

If the lower 4 bits are determined as 1H in S92, S93 executes the POS initializing processing "INT POS". In case that POS's in 15 steps from OH to EH are to be detected by combination of 3 bit codes, the configuration must be such that the same code is shared by multiple POS's. In this case, POS should be counted in response to changes in the codes, with the current POS being constantly held. However, if the main CPU 100 is unable to recognize the current POS for some reason, the taking lens 11 must be moved to the position where the code and POS is in one-to-one correspondence or to the terminal end so that POS can be re-counted. POS initialization is a processing to be done for this purpose.

It is checked in S94 whether or not the lower 4 bits of the first serial signal is 3H. If so, rewind processing "REW" is executed in S95.

It is then checked in S96 whether or not the lower 4 bits is 4H and in S98 whether or not they are 5H. If the former is the case, loading processing "LD" is executed in S97, while in the latter case, wind processing "WD" is done in S99.

If judgments in S90 to S98 are all negative, and those in S73 to S76 are all negative, processing goes to S66 in External Control.

((Image Plane Exposure Quantity Inspection in a Camera))

Explanation is now given to an inspection unit for inspecting the camera the above explained an external control program. Inspections of the image plane exposure quantity and of the operation of the camera will be described below.

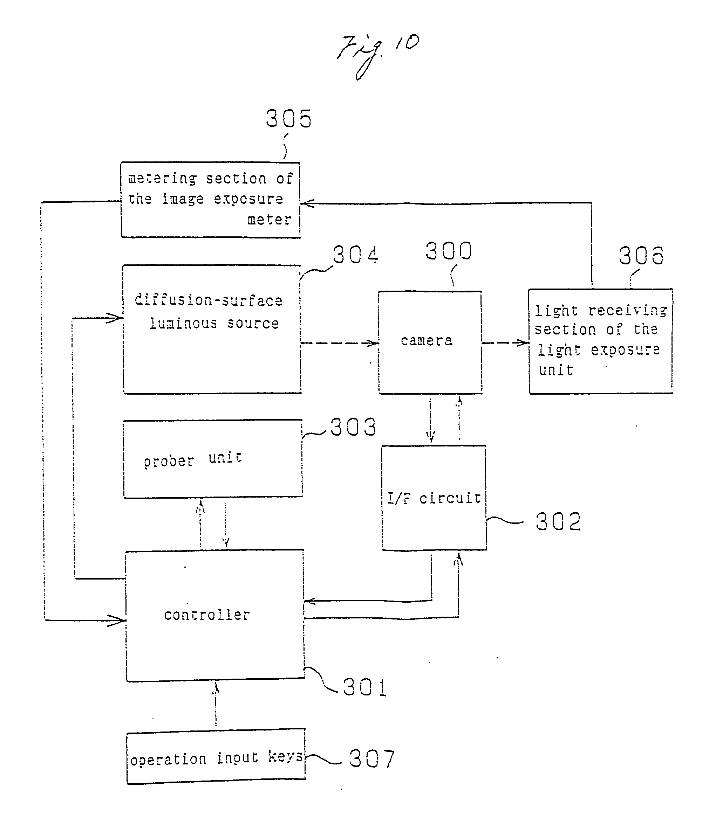

Fig. 10 shows a block diagram with this inspection unit applied to inspection of an image plane exposure quantity. In Fig. 10, numeral 300 indicates a camera, 301 a controller, 302 an interface (I/F) circuit, 303 a prober unit, 304 a diffusion-surface luminous source of an image plane exposure meter, 305 a metering section of the image plane exposure meter, 305 a light-receiving section of the image plane exposure meter, and 307 operation input keys. In measuring the image plane exposure quantity, the camera is placed in exact opposition to the diffusion-surface luminous source 304, with the light receiving section 306 located in the film plane of the camera 300. Light emission from the diffusion-surface luminous source 304 is controlled to offer a certain range of brightness from the lowest to highest level. The prober unit 303 is controlled by the controller 301 and interconnects the camera 300 and the controller 301 to perform exchange of information via the interface 302. Camera 300 thus carries out controls following the external control information. The light-receiving section 306 gives the output corresponding to the light received, to a metering section 305 which in turn gives the measurement result to the controller 30.

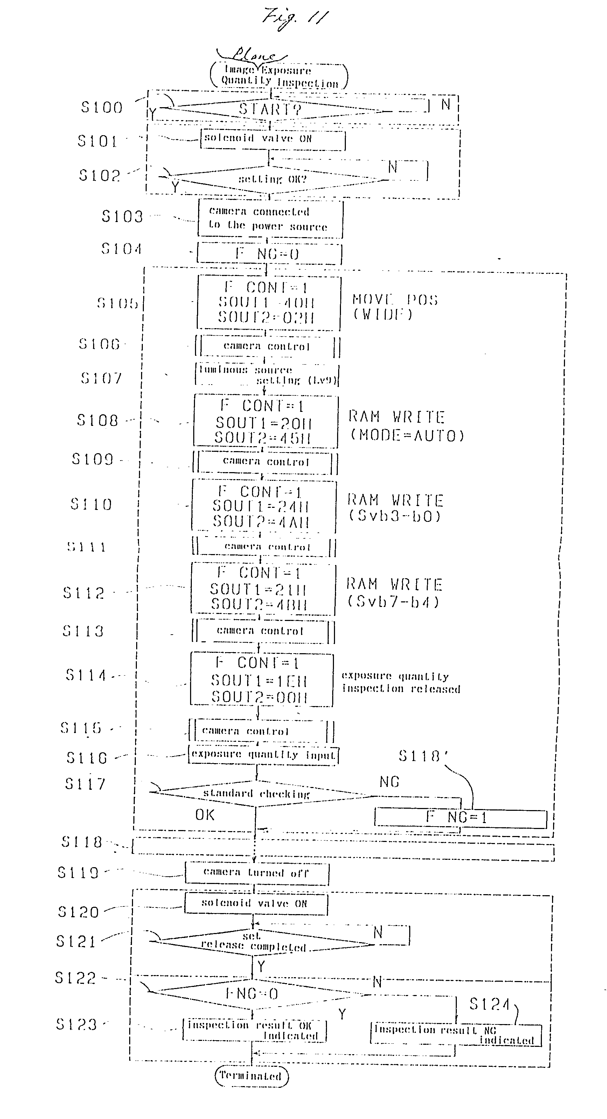

The controller 301 starts, changes and terminates controls in response to operation of an operation input key set 307 which consists of a START key, a NEXT key and an END key. This controller 301 executes the image plane exposure quantity inspection flow shown in Fig. 11 in response to operation of the input key set 307.

When the START key is operated, the controller 301 gives an answer YES in S100, turning on a solenoid valve of the prober unit 303 (S101) and then checking whether or not the camera 300 is in connection with the controller 301 (S102). Processing for connecting the camera 300 with a power supply unit then takes place and waits for about 1 second until the camera starts normal operation (S103). A flag FNG is then set to FNG = 0 to check if the camera 300 is an acceptable one in terms of the image plane exposure quantity (S104). FNG = 0 represents the camera is acceptable, while FNG = 1 indicates the camera is in failure. The flag is set to FNG = 0 in S104 to tentatively treat the camera 300 as the acceptable one.

The controller 301 then goes to S105 to set FCONT = 1, SOUT1 = 40H, SOUT = 02H. FCONT is a flag to check if a data should be sent to the camera 300. FCONT = 1 represents the state in which the data is sent to the camera 300, while FCONT = 0 the state in which a data is sent from the camera 300 to the controller 301. SOUT 1 stands for the data to be sent to the camera 300 in SOI IN 1 processing and SOUT 2 a data to be sent to the camera 300 in SIO IN 2 processing. "40H" is "01000000", and so represents the position move command MOVE POS as seen in Table 2, and "02H" is "00000010" representing the data for moving the zoom lens to POS = 2. That is, data of "40H" and "02H" are commands to move the zoom lens toward the wide extremity.

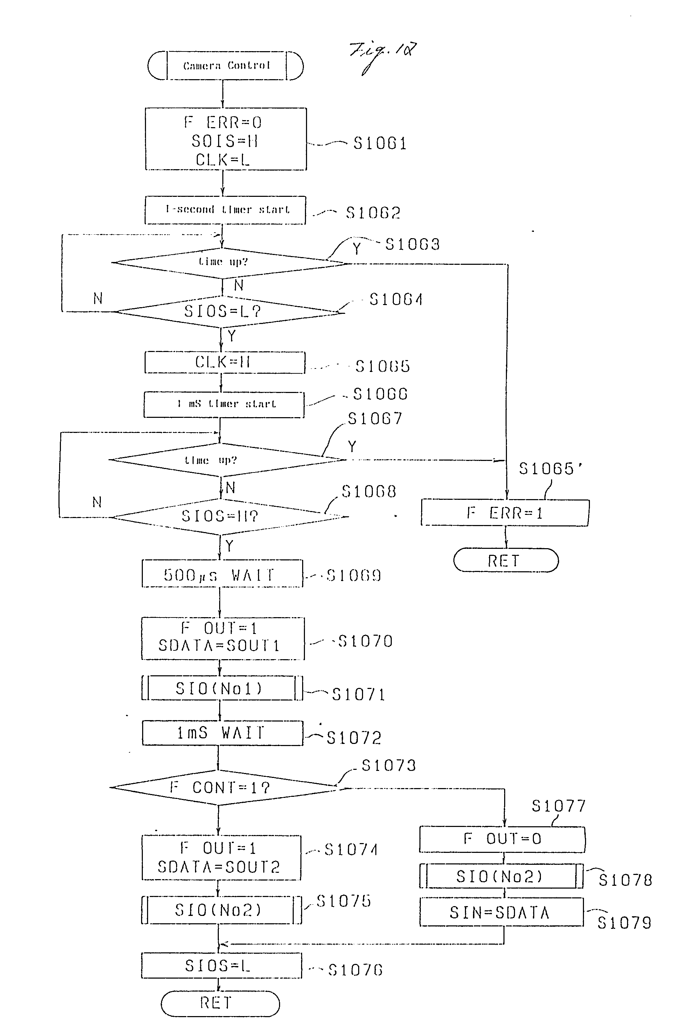

After executing processing in S105, the controller 301 goes to S106 where camera control processing takes place. This camera control processing is executed following the flow chart shown in Fig. 12.

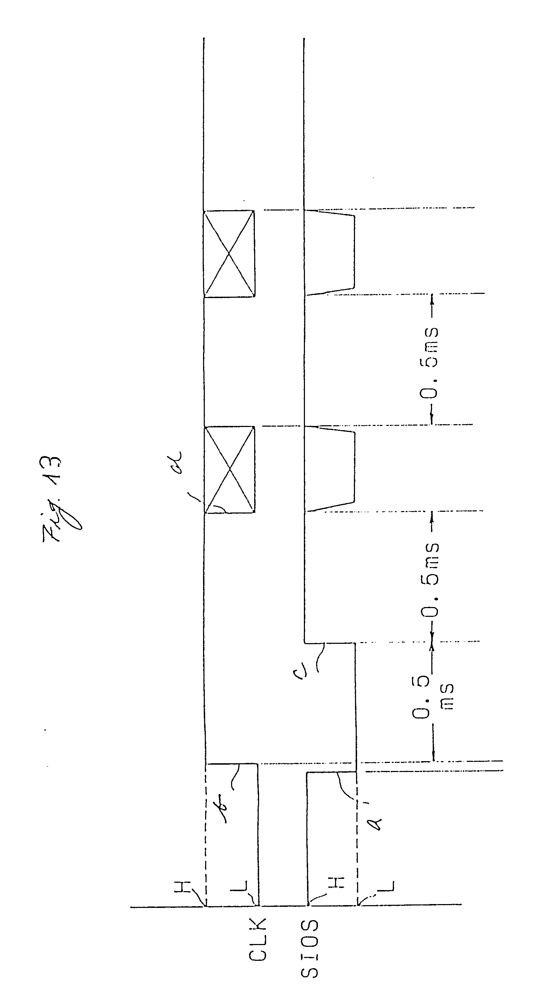

If this camera control processing, flags FERR = 0, SIOS = H and CLK = L are first set in S1061, starting a one-minute timer (S1062). Here, flag FERR checks whether or not any error has occurred in information exchange between the camera 300 and the controller 301. FERR = 1 indicates the occurrence of error while FERR = 0 indicates no error. When SIOS = H is set in this camera control processing, the main CPU 100 of the camera 300 goes to External Control processing shown in Fig. 7. After the processing of waiting for 500µs in S50, it goes to S51 to check whether or not CLK = L. Since CLK is set to L in the processing of S1061, S51 gives an answer YES, then going to S52. SIOS = 1 processing is done in S52. Since there is a processing of waiting for 500 µs as it goes from S50 to S52, SIOS is turned from "H" to "L" by means of S52 processing after 500 µs since CLK = 1 has been set as shown in (a) of Fig. 13. At the same time, setting SIOS = H is effected in S52 after waiting for 500 µs. On the other hand, the controller 301 executes in S1063 checking if the time is up, repeats the loop of checking is SIOS = 1 in S1064 and S1065 and waits until SIOS is turned to "L". Since SIOS is set to "L" normally in 1 second in S52, the controller 301 gives an answer YES in S1064 and goes to S1065 setting CLK = H. Consequently, CLK is turned to "H" with some delay after SIOS gets "L" as shown in (b) of Fig. 13. If SIOS = L does not come out after 1 second, occurrence of an error is assumed so that processing goes to S1065 setting FERR = 1, then going to S107. If there is no error occurred, on the other hand, answer YES is given in S57 of External Control processing in the camera 300, so that processing goes to S54 where it is ready to execute SIO IN 1 processing.

The controller 301 then goes to S1066 starting the 1 ms timer, and executes checking if the time is up and if SIOS = H in S1067 and S1068. If SIOS is not "H", S1067 and S1068 are repeated. In the meantime, SIOS = H is set in the External Control processing in the camera 300 after waiting for 500 µs in S52. As a result, SIOS is turned to "H" in 500 µs after it gets L as shown in (c) of Fig. 13. When the time is up to give an answer YES in S1067 during executing S1067 and S1068 of the camera control processing, FERR = 1 is set and the processing goes to S1067. Since SIOS = H is set usually in 1 ms, answer YES is given to go to S1069 where the processinf stops for 500 µs, then going to S1070.

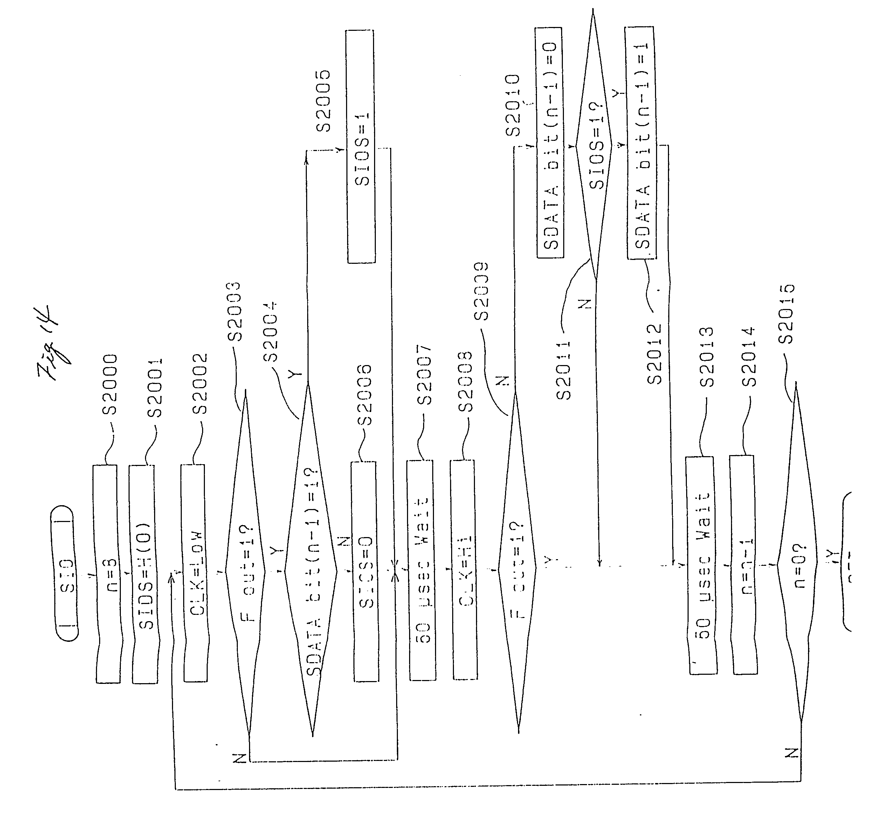

The controller 301 executes setting of FOUT = 1 and DATA = SOUT1 in S1070 then going to S1071. In S1071, serial IO call processing (SIO) takes place as shown in Fig. 14.

In SIO call processing, n = 8 is set in S2000 and processing goes to S2001 where SIOS = H setting processing is executed then going to S2002. CLK = L setting processing is then executed in S2002 then going to S2003. Here, CLK is turned from "H" to "L" as shown in (d) of Fig. 13 because of the first setting of CLK = L in S2002. It is examined in S2003 whether or not flag FOUT = 1 holds. If FOUT = 1 in S2003, processing goes to S2004 to check if SDATA bit (n - 1) = 1. Since n = 8 here, it is examined how the data at the bit 7 goes. If the bit 7 data is "0", processing goes to S2006, while if it is "1", it goes to S2006. The bit 7 data "1" or "0" is thus transferred. The controller 301 then goes to S2008 after waiting for 50 µs in S2007. After setting of CLK = H in S2008, processing goes to S2009. It is checked in S2009 whether or not FOUT = 1. If answer is yes in S2009, processing goes to S2010, and if no, to S2011. After processing of waiting for 50 µs in S2010, processing goes to S2014 where n = n - 1 processing is executed then going to S2015 to check if n = 0. With n = 6 given when the first processing is complete, the processing goes to S2002 to set CLK = L again. Output of the data of at the bit 6 is thus executed in this process.

Repeating this processing 8 times, answer yes is given in S2015, whereby the 8 bit data is transferred from the controller 301 to the camera 300. The controller 301 thus terminates the processing then going to S1072. After waiting for 1 ms in S1072, the processing goes to S1073.

With FOUT = 0, answer NO is given in S2003 so that S2004, S2005 and S2006 are skipped over to go to S2007 where waiting for 50 µs takes place. After setting of CLK = H in S2008, the processing goes to S2009 and then to S2010 to check if FOUT = 1. In S2010, setting of SDATA bit (n - 1) = 0 takes place, which is followed by S2011 where whether SIOS = 1 or not is examined. If answer YES is given in S2011, the processing goes to S2013 after S2012, while if answer is NO, it directly goes to S2013. In S2012, setting of SDATA bit (n - 1) = 1 takes place. Thus, 1-bit data is sent to the controller 301 when the steps from S2010 to S2012 are executed. Repeating these steps n = 8 times, 8-bit data is received by the controller 301.

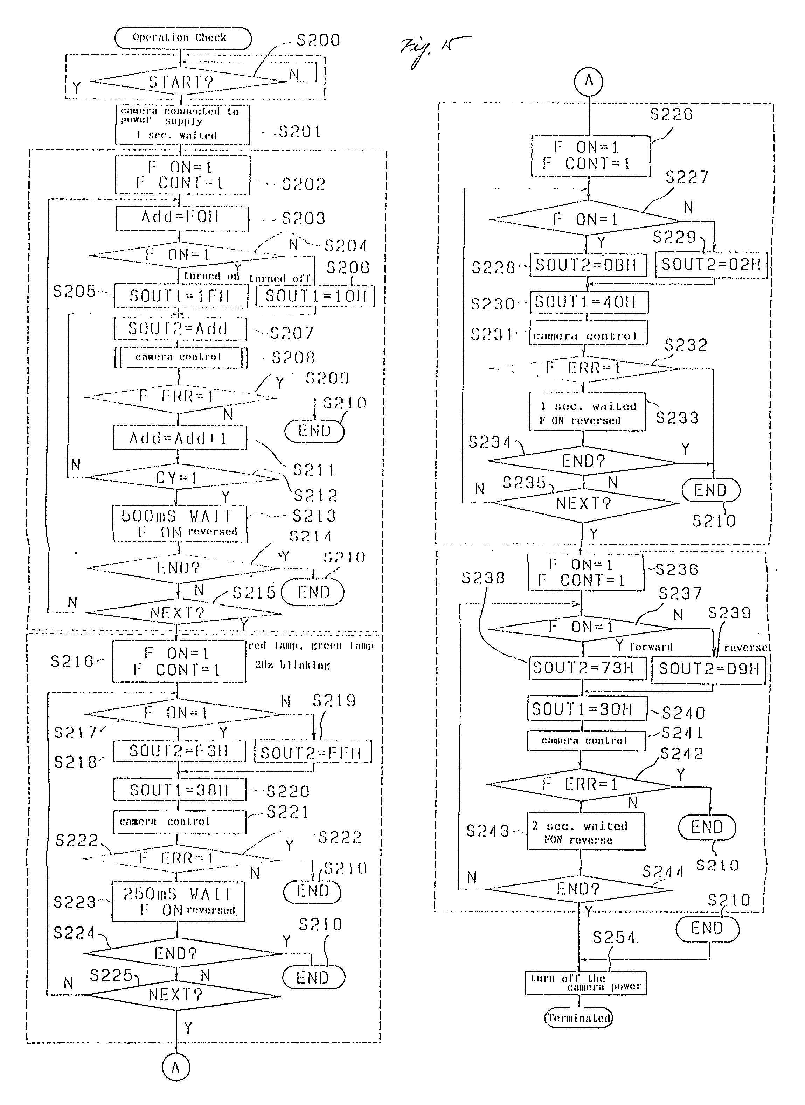

S1073 checks if FCONT = 1. Since the data is here sent to the camera 300, FCONT = 1 holds so that answer YES is given in S1073. Processing thus goes to S1074 to execute setting of FOUT = 1 and SDATA = SOUT 2. The controller 301 then goes to S1075 to execute SIO call processing again. Thus, SIO processing shown in Fig. 15 is again executed to send data to the camera 300. After sending the command code and data to the camera 300, the processing goes to S1076 where SIOS = L is set, and to S107. If answer NO is given in S1073, the processing goes to S1077 to set FOUT = 0, then to S1078. SIO call processing is executed in S1078 which is followed by S1079. SIN = SDATA setting is executed in S1079. The data is sent from the camera 300 to the controller 301 by means of the steps from S1077 to S1078.

In S107, light intensity adjustment for the luminous source 304 is carried out. With the luminous source 304 set to the light value LV = 9, the processing goes to S108. FCONT = 1, SOUT1 = 20H and SOUT2 = 45H are set in S108. Here, 20H is RAM WRITE as seen from Table 3 and 45H specifies an address, whereby Add = 045H is specified. The data "dddd" is thus written into this Add = 045H. This data is dddd = 0000 which represents the the camera mode is set to an auto mode. Thereafter, the controller 301 goes to camera control shown in Fig. 12 (S109). A data "0000" is written into Add = 045H of the camera RAM by means of this camera control processing.

The controller 301 then goes to S110 where settings of FCONT = 1, SOUT1 = 24H and SOUT = 4AH are executed. This is done to write a data of 4H into Add = 04AH. The processing then goes to camera control in S111 where ISO sensitivity information is written into the camera 300. The data corresponding to the lower bits 3 to 0 is written in this process. In S112, FCONT = 1, SOUT1 = 21H and SOUT = 4BH are set in S112. This is done to write a data of "1H" into Add = 04BH. The controller 301 likewise goes to S113 to execute camera control processing. The data corresponding to the higher bits 7 to 4 is thus sent to the camera 300, and its contents are written into RAM of the camera 300.

S114 executes settings of FCONT = 1, SOUT1 = 1EH, and SOUT2 = 00H. "1EH" is "00011110" that corresponds to an exposure quantity test command. The controller 301 then goes to S115. Camera control processing is executed in S115. Release command is thus set to the camera 300. In S116, exposure quantity input processing takes place. The controller 301 compares the exposure quantity input data with an inspection standard and if it complies with the standard, executes the same processing with changing the settings of the light values and the ISO sensitivity. When answer NO is given in S116, setting of FNG = 1 is executed in S118′ to perform exposure quantity inspection in conditions specified by other standards (S118).

When exposure quantity inspection is completed in all the conditions specified by the standard, the controller 301 goes to S119 to turn off the power of the camera 300. The Pocessing then goes to S102 to turn off solenoid valve so that the prober unit 303 is separated from the camera 300. The processing then goes to S112 to examine whether or not the set releasing is completed. After the set releasing, the processing goes to S122 to check if FNG = 1. If FNG = 0, the processing goes to S123 to execute indication of inspection result OK, while if FNG = 1, it goes to S124 to indicate that the inspection result is NG.

This completes the exposure inspection for one camera.

Operation inspection is now described with reference to Fig. 15.

(( Operation Inpsection))

S200 first examines whether or not the START key has been depressed. If the START key is found pressed in S200, processing for connecting the camera 300 to the power supply unit takes place and goes to S202 after waiting for one second. Settings of FON = 1 and FCONT = 1 are executed in S202. Here, FON = 1 stands for turning on the LCD panel 32 and FON = 0 turning the LCD panel off. After S202, the controller 301 executes setting of Add = FOH in S203, then going to S204. It is examined in S204 whether or not FON = 1. If answer YES is given in S204, the processing goes to S205, while if NO, it goes to S206. Setting of SOUT1 = 2FH is executed in S205 which is followed by the setting of SOUT1 = 20H in S206.

The controller 301 then goes to S207 to carry out setting of SOUT2 = Add, then to camera control processing (S208). The address specified by this processing is "1E" and the data to be transferred is determined by the lower 4 bits specified in S205 and S206. These data are sent to the camera 300 in the camera control processing. The processing then goes to S209 to check if FERR = 1. If there is an error in S209, end processing (S210) follows, while with no error, processing goes to S211 to execute Add = Add + 1.

Whether carry CY = 1 is then examined in S212. Here, the carry CY is a flag indicating shifting up from the highest order bit of the register, representing 0 if there is not shift-up, and 1 if any.

With CY = 0, the processing goes to S207 and the step in S207, 209, 211, 212 are repeated. When CY = 1 in S212, the processing goes to S213. Reversing of FON is executed in S213 after waiting for 50ms. Thus, FON = 0 is set if FON = 1, while if FON = 0, ON = 1 is set. The controller 301 then goes to S214 to check if the END key has been operated. If answer is YES in S214, the processing goes to S210, and if NO to S215.

S245 examines whether or not the NEXT key has been operated. If answer is NO in S215, the processing goes to S203 to repeat blinkings of all the segments of the LCD. If YES is given in S215, the processing goes to S216. Setting of FON = 1 and FCONT = 1 are executed in S216. The controller 301 then goes to S217 to check if FON = 1. If FON = 1, the processing goes to S217 and to S219. In S218, setting of SOUT1 = F3H is executed then going to S220, while setting of SOUT1 = FFH is executed in S219 which is followed by S220. The controller 301 then goes to camera control processing in S221. The data output control PORT 5,4 OUT is done by "38H" of SOUT1, "00" at the bit 3, the bit 2 is determined by SOUT2 = F3H in S218 and "11" at the bit 3, bit 2 by SOUT2 = FFH in S219. These data are thus sent to the camera 300 in the camera control processing.

S222 checks if FERR = 1. If answer is YES in S222, the processing goes to S210 and if NO, to S223. In S223, the reversing of FON is executed after waiting for 259 ms in S223, which is followed by S224. In S224, it is examined if the END key has been operated. If answer is YES in S224, the processing goes to S225 and if NO, to S210. S225 checks if the NEXT key has been operated. If NO, the processing goes to S217 with the steps in S217 through S225 repeated. Simultaneous blinkings of the red lamp and the green lamp are thus repeated at an interval of 2 Hz.

Answer YES is given when the NEXT key is operated and the processing goes to S226, where settings of FON = 1 and FCONT = 1 are executed. The controller 301 then goes to S227 to check if FON = 1. If answer YES is given in S227, the processing in S228 is executed, while answer is NO in S227, the processing in S229 is executed. S228 executes setting of SOUT2 = OBH and S229 setting of SOUT2 = 02H.

The controller 301 then goes to S230 to execute setting of SOUT1 = 40h, then going to the camera control processing. MOVE POS for operation control is specified by SOUT1 = 40H: POS = B by SOUT2 = 0BH and POS = 2 by SOUT2 + 02H. These data are sent to the camera 300 in the camera control processing (S231). After executing the camera control processing in S231, the controller 301 goes to S232. S232 checks if FERR = 1. If answer YES is given in S232, the processing goes to S210 to perform the END processing. If answer is NO in S232, the processing for reversing of FON is executed after waiting for 1 second, which is followed by S234 to check if the END key has been operated. If answer YES is given in S234, the processing goes to S210, while if NO, it goes to S235. S235 checks whether the NEXT key has been operated. If answer is NO in S235, the processing goes to S227, repeating the steps from S227 to S235. Alternate forward and reverse rotation of the zoom motor are thus repeated to reciprocate the zoom lens between the tele extremity of POS = B and the wide extremity of POS = 2.

If answer is YES in S235, the processing goes to S236 where settings of FON = 1 and FCONT = 1 are executed. The controller 301 then goes to S237. S237 checks if FON = 1. If FON = 1 in S237, the processing goes to S238, while if FON = 0, to S239. S240 executes setting of SOUT = 30H. Output control is specified by this SOUT1 = 30H, forward rotation of the wind motor is specified by SOUT2 = 73H. and reverse rotation of the wind motor is specified by SOUT2 = D9H, The controller 301 goes to camera control processing in S241, whereby these data are sent to the camera 300. Processing then goes S242 to check if FERR = 1. If answer YES is given in S242, the processing goes to S210 and if NO, to S243. Processing for reversing of FON is executed after waiting for 2 seconds in S243, then going to S244. S244 checks if the END key has been operated. If answer is NO in S44, the processing goes to S237 repeating the steps from S237 to S244. In case where the END key is not operated, the execution command to the camera 300 gives a data corresponding to forward and reverse rotation at an approximate interval of 2 seconds. If answer YES is given in S244 where the END key has been operated, the processing goes to S245 to turn off the power of the camera 300 to terminate the operation inspection.

As has been described above, according to the above embmodiment, the camera can be controlled externally in the manner described above so that the main CPU operates in response to execution commands given externally, thereby facilitating inspection as well as changing the operation contents of the camera.

Second Inspection System

The above camera has another inspection system addition to the one described above.

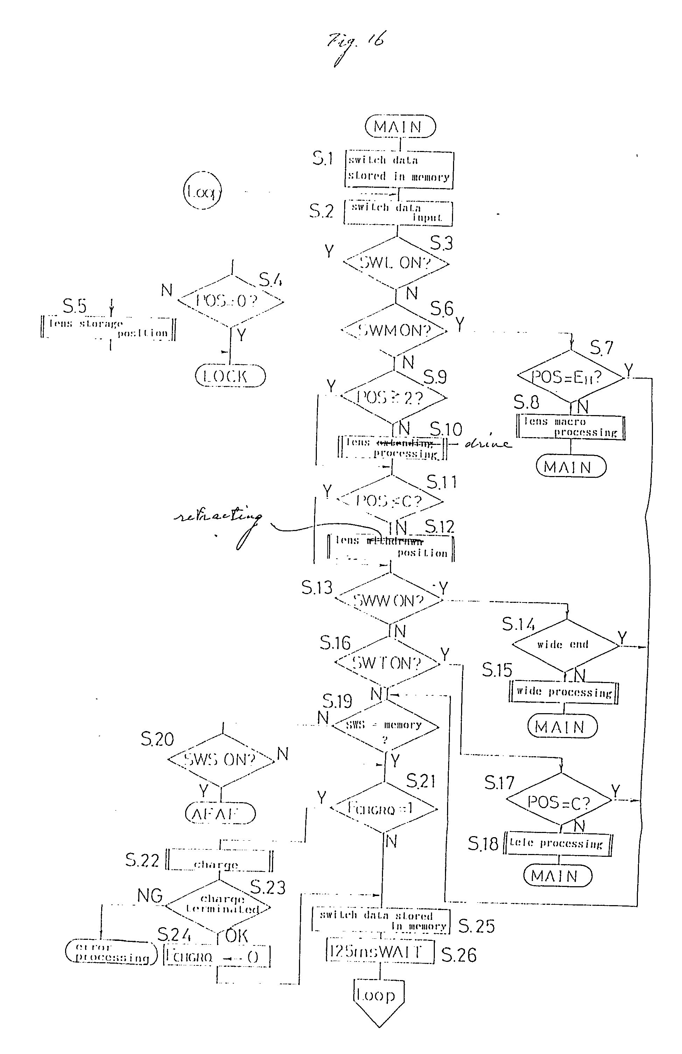

Fig. 16 is a flow chart of the Main Flow disclosing the instructions relating to another inspection system. It should be noted that only one Main Flow is executed in the above camera 300, and the flow chart illustrated in Fig. 6 is also to disclose the instructions relating to the first inspection system.

In the main flow illustrated in Fig. 16, when there is no change in the state of the photometric switch SWS or when it changes from ON to OFF (S.19), whether battery charging for the strobe 22 is required or not is checked by accessing a battery requirement flag $F_{CHGRQ}$ in S.2021. When this flag is 1, that is battery charging is required, the battery charging process is carried out at S.2022 and whether battery charging is completed or not is checked at S.20.23.

When the result is NG at S.2023, for example, when battery charging is not completed within the scheduled period because the supply voltage is low, the processing goes to the error process which is not illustrated. When the result is OK at S.2023, the battery requirement flag $F_{CHGRQ}$ is set to 0 at S.2024 and the processing goes to S.24.

In case battery charging is not required at S.2021, the processing directly goes to S.24. The other instructions in this main flow are substantially same as those of Fig. 6.

<Main CPU : AEAF flow>

Next, the AEAF flow which carries out the photometric, distance measurements and the release system processing which are separated from S.20 of the main flow is explained.

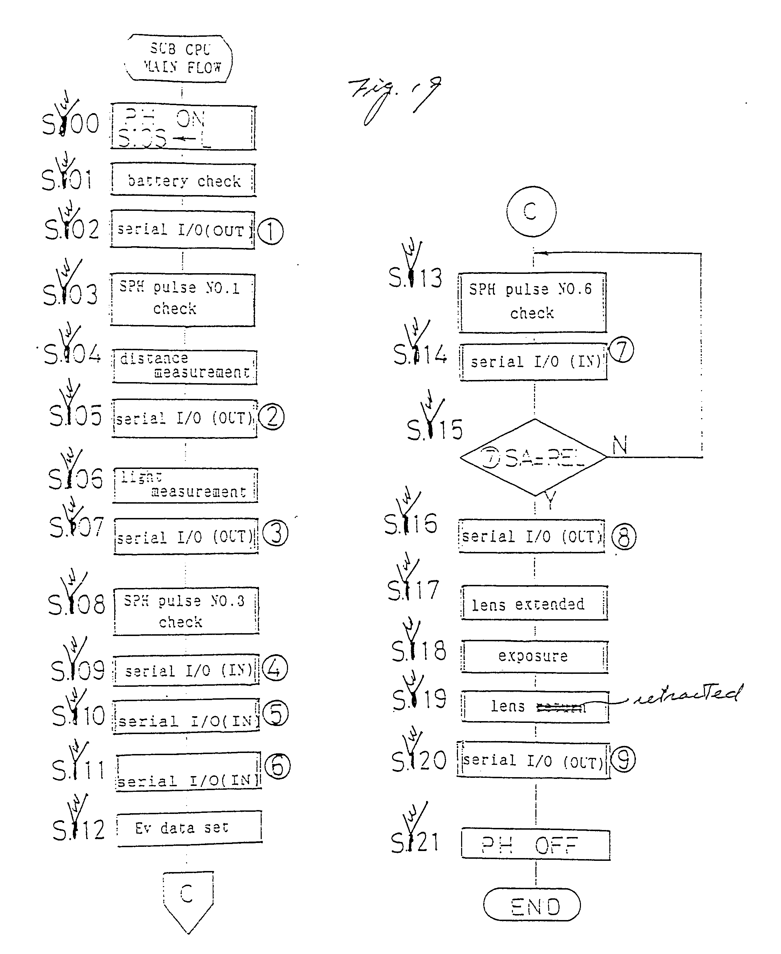

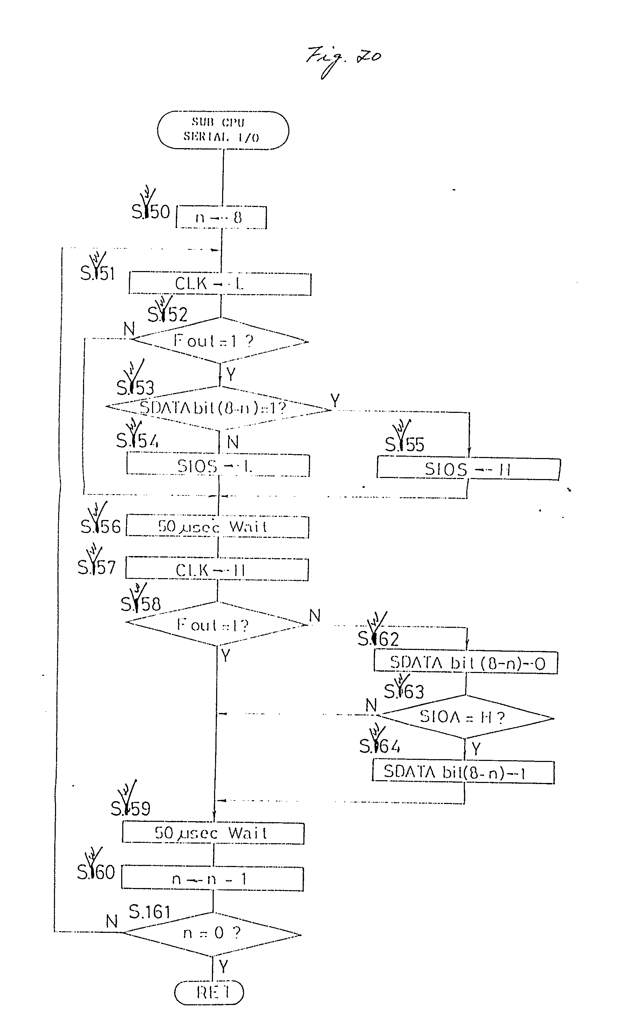

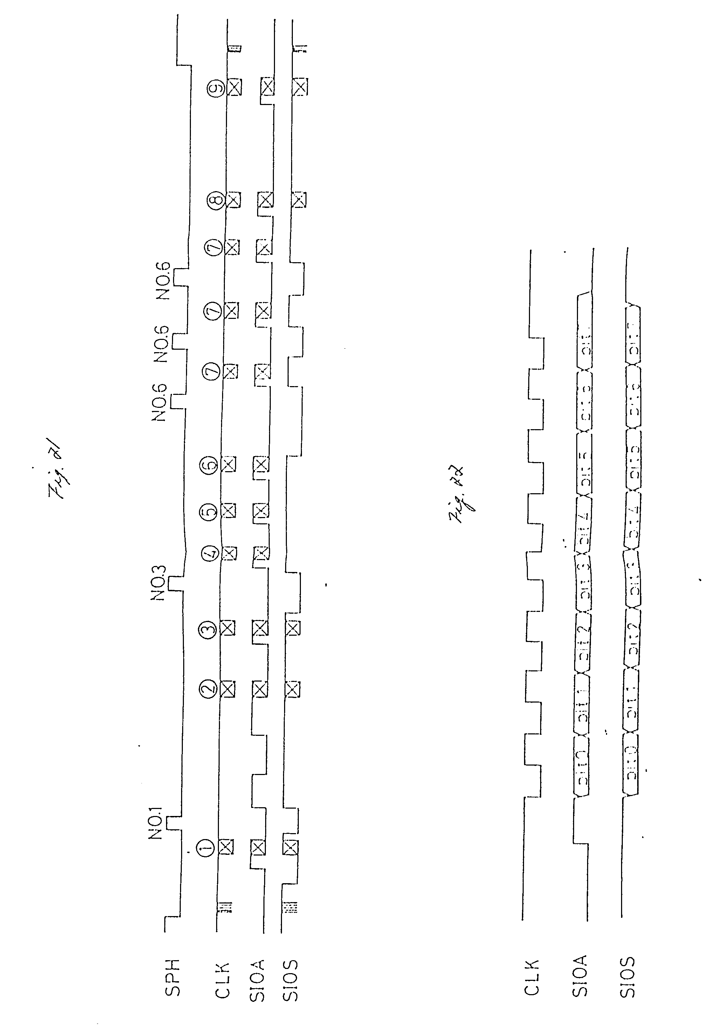

By transferring serial data, this process is carried out with the sub CPU 200 which is described later, therefore, the explanation is given while referring to the timing chart in Fig. 21 which shows the flow of both processes.

Data transfer is carried out synchronized with clock CLK (1) - (9) output from the sub CPU 200 as shown in Fig. 21. The transferred data consists of 8-bit serial signals and their details are explained in Table 4.

Also, in the following explanation, the signal output from the main CPU 100 to SIOA is referred as SA and the signal output from sub CPU 200 to SIOS is referred as SS.

When the processing is started, the main CPU 100 switches on the power of the sub CPU 200 by setting SPH to "L" at S.2050, and when the sub CPU 200 is switched on, the main CPU 100 stops processing for 10 ms to avoid superimposing noise on the CLK and SIOS signals.

Main CPU 100 detects the level of SIOS at S.2051. When it is "L", the processing goes to S.2052. When it is not "L", main CPU 100 sets SPH to "H" at S.2054 to go to the error process.

At S.2052, by synchronizing with (1) CLK, the main CPU 100 outputs an error code to SIOA signal line as serial output (1) SA, and also it inputs the result BCK of the battery check output from the sub CPU 200 from the SIOS signal line as a serial signal (1) SS.

Table 4

| No. | SIOA | SIOS | SPH |
|---|---|---|---|
| (1) | Error code | | ◎ |
| | Table 2 | Battery check | |
| (2) | DATA | DATA | |
| | EXP | AFDATA | |
| (3) | DATA | DATA | ◎ |
| | POS & Dx | BvDATA | |
| (4) | DATA | | |
| | LLDATA | | |
| (5) | DATA | | |
| | EvDATA | | |
| (6) | DATA | | ◎ |
| | AvDATA | | |
| (7) | ANUL or REL | | |
| (8) | | RLEXC | |
| (9) | | WIND | |

Table 5

| | | |
|---|---|---|
| 40H - 5FH | Serial IO error | |
| 80H - 87H | Zoom code change abnormal | b.2 - 0 = Abnormal code |
| 88H - 8FH | Zoom time-up error | b.2 - 0 = Zoom code |
| 90H - 97H | Telephoto or wide end error | b.2 - 0 = Zoom code |
| 98H - 9FH | Zoom position error | b.2 - 0 = Zoom code |
| COH | Rewind error | |

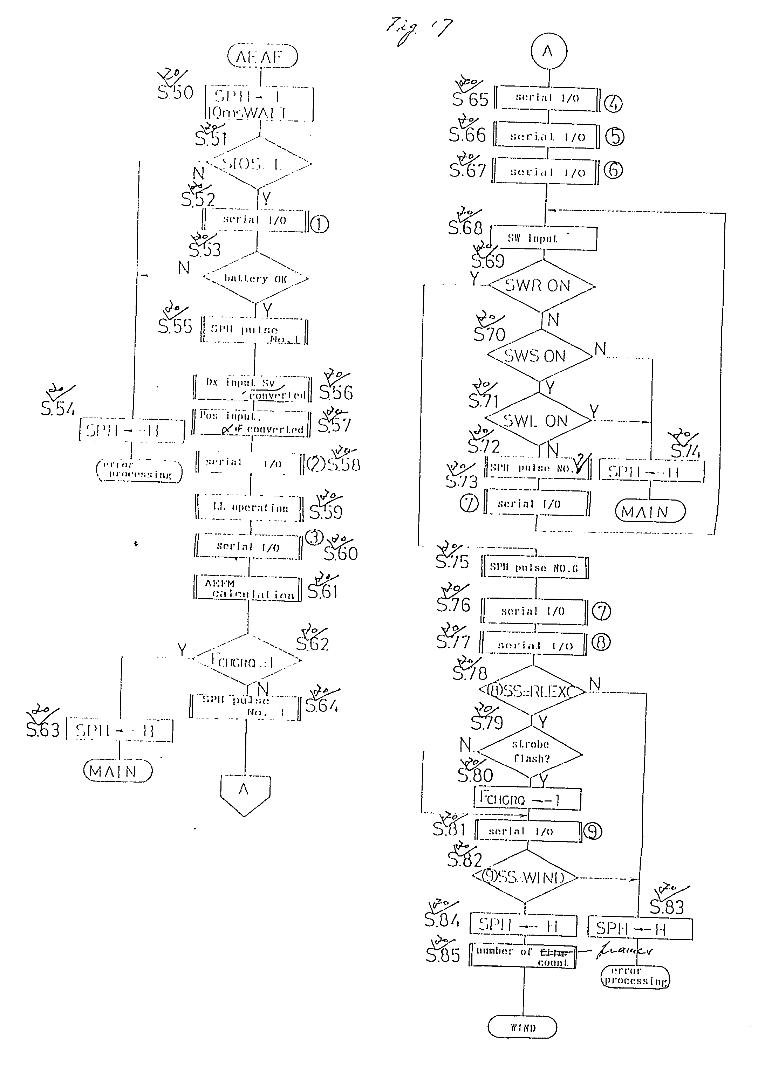

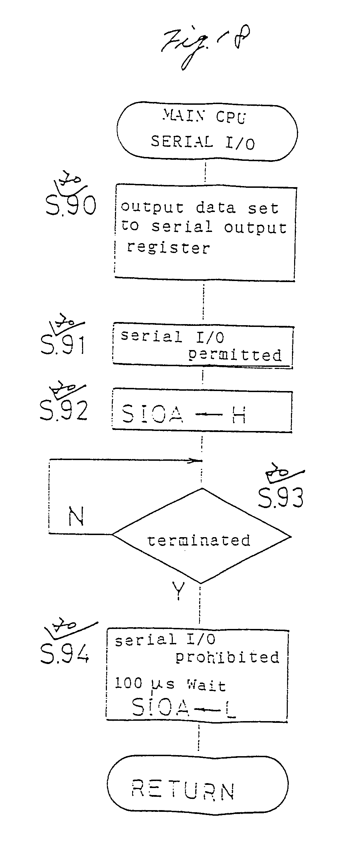

Also, this serial input/output processing is performed by hardware, so in the processing in the software of the main CPU, as shown in Fig. 18, an error code is set to the register for serial output at S.2090 first, and then serial input is enabled at S.2091 and clock generation of the sub CPU 200 is also enabled when SIOS is set to H at S.2092.

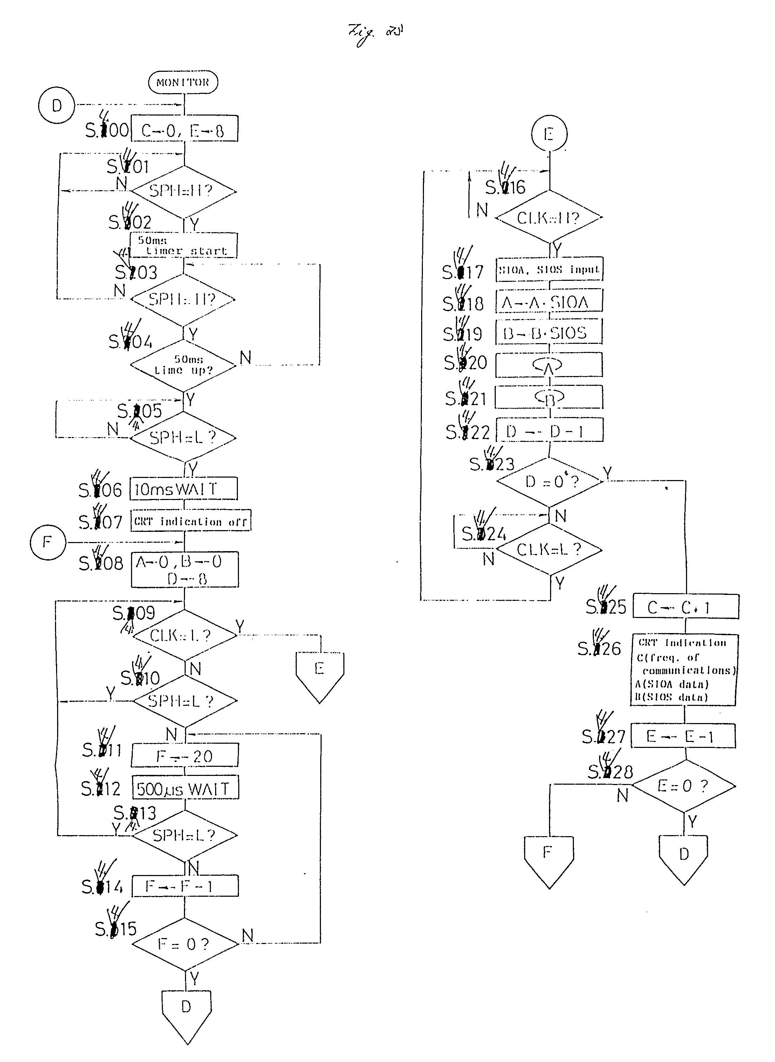

After this, if CLK is input, data is output 1 bit at a time to the SIOA signal line synchronized with CLK automatically, and the data is set 1 bit at a time to the serial input register from the SIOS signal line as shown in Fig. 22. Software in the main CPU 100 waits for the end of serial input/output at S.2093. When it finishes, the main CPU 100 inhibits serial I/O at S.2094 and sets SIOA to L to read the data from the serial input register as the results of the battery check.

Error codes include the various information shown in Table 5 which are not required to control the sub CPU 200, and by connecting the external unit described later, it can detect the kind of error caused in the camera without any special operation.

Main CPU 100 judges the result of the battery check which is input at S.2053 and goes to error processing via S.2054 when the battery voltage is insufficient to continue processing.

At S.2055, the main CPU 100 outputs SPH pulse NO.1 of 500$\mu$s to SPH. This pulse has a function to transfer the signal to the sub CPU 200 to carry out the processing after battery checking.

At S.2056, the DX code is input from the DX terminal and this code is converted into ISO sensitivity Sv (Apex display: hereinafter displayed in the same way) of the film.

At S.2057, lens position code POS is input from the ZC terminal and then by converting this POS, the variation alpha ($\alpha$) of the open F number of the focal length for taking photographs which is based on the open F number for wide is acquired.

Main CPU 100 outpus EXP to SIOA as (2)SA at S.2058, and also inputs the distance measurement information AFDATA as (2)SS which the sub CPU 200 outputs to SIOS.

EXP is data showing the accumulated number of photographs taken by the camera, and this data is not required for the sub CPU 200. For example, if the 10 frames is programmed as 1 bit, the data of each 10 frames between frame 0 and frame 2,560 can be output to be monitored outside the camera.

At S.2059, with AFDATA of (2)SS, LL (lens latch) calculation is carried out to acquire how much the lens should come out.

At S.2060, the main CPU 100 outputs the zoom position code POS and Dx information as (3)SA, and also inputs the subject brightness information BvDATA as (3)SS.

This (3)SA is also data which is not needed by the sub CPU 200, so it is not necessary to be transferred.

At S.2061, AEFM (auto exposure, Flashmatic) calculation processing is called to define the exposure value Ev or diaphragm value Av according to the above data.

At S.2062, whether the battery requirement flag $F_{CHGRQ}$ is 1 or not is checked. When this flag is 1, the main CPU 100 sets SPH = H at S.63 and the signal is transferred to the sub CPU 200 to discontinue processing, and the processing goes to the main flow.

At S.2064, SPH pulse NO.3 of 500 $\mu$s is output. S.2064 corresponds to transferring the signal to the sub CPU 200 to continue the process.

After outputting SPH pulse NO.3, the main CPU 100 outputs lens latch data LLDATA as (4)SA at S.2065, exposure data AEDATA as (5)SA at S.66 and Flashmatic data as (6)SA at S.2067 to SIOA.

At S.2068, switch data is input and according to this data, the following judgments are carried out.

First, whether release switch SWR is ON at S.2069, photometric switch SWS is ON at S.2070 and lock switch SWL is ON at S.2071 are checked. When release switch SWR is OFF, photometric switch is ON and lock switch is OFF, main CPU 100 outputs SPH pulse NO.6 at S.2072 and also outputs command ANUL as (7)SA to SIOA at S.2073, then loops between S.2068 and S.2073 till the release switch is turned ON. In this case, sub CPU 200 will be in the waiting state.

While main CPU 100's processing goes into a loop, if photometric switch SWS is turned OFF or lock switch SWL is turned ON, main CPU 100 sets SPH to "H" at S.2074 and then, the processing goes to the main flow.

When the release switch is ON, main CPU 100 outputs SHP pulse NO.7 of 500 $\mu$s at S.75 and command REL as (7)SA which is a command for exposure, at S.2076.

Next, main CPU 100 outputs dummy data (8)SA which has no particular meaning, at S.2077, and also inputs (8)SS which is output from sub CPU 200, and then judges if (8)SS is a command RLEX to start release or not at S2078.

At S.2079, whether the strobe 22 was flashed for taking a photograph or not is checked. When the strobe 22 was flashed, the battery requirement flag $F_{CHGRQ}$ will be set to 1 to charge the battery at S.2080.

At S.2081, dummy data (9)SA is output and (9)SS is input. At S.2082, whether (9)SS is a command WIND requiring film winding or not is checked. When scheduled commands were not transferred at S.2078 and S.2082, SPH is set to "H" at S.2083 and error processing will be carried out.

When the scheduled commands have been transferred, main CPU 100 set SPH to "H" at S.2084, increments the accumulated number of taken photos which was described before, and flows to the winding process to wind the film by one picture.

A detailed explanation of this winding process is not given, however, the processing goes to the main flow when winding is finished correctly. When the winding is not completed in the schedules time, the rewinding process will be carried out.

<Sub CPU : Main flow>

Next, the operation of sub CPU 200 will be explained according to the flow chart in Fig. 19 and the timing chart in Fig. 21.

When main CPU 100 sets SPH to "L", sub CPU 200 performs power hold at S.100 and transfers the signal to inform main CPU 100 that the operation has started by setting SIOS to "L".

Next, at S.301, the sub CPU 200 checks the voltage of the battery using battery check circuit 220, and outputs the checking results as data (1)SS to SIOS synchronized with the built-in clock (1) CLK at S.302. The timing of clock generation and data input/output is shown in the serial I/O flow in Fig. 20.

In the serial I/O flow of sub CPU, n counter is set to 8 at S.350 and the processing flows to S.351. At S.351, CLK is set to "L" and the processing flows to S.352. At this step, CLK is set to "L" from "H" as shown in Fig. 12.

At S.352, whether flag $F_{OUT}$ = 1 or not is checked. This flag is set to 1 when the sub CPU 200 outputs data for serial I/O processing and is set to 0 for input.

First, $F_{OUT}$, that is when the sub CPU 200 outputs serial data, is explained.

In this case, the processing goes to S.353 and checks if bit (8-n) of the serial output data is 1 or not. At the beginning of this flow, n = 8, therefore, bit 0 of the output data is checked first. When bit 0 of the data is "0", the processing goes to S.354 to set SIOS to L. When bit 0 of the data is 1, the processing goes to S.355 to set SIOS to H.

With the above processing, data 1 or 0 of bit 0 will be output to SIOS. Sub CPU 200 sets CLK to H at S.357 after discontinuing the processing for 50µs at S.356.

At S.358, whether $F_{OUT}$ = 1 or not is checked again. When $F_{OUT}$ is 1, the processing goes to S.359, and after discontinuing the processing for 50µs at S.359, processing goes to S.360 to subtract 1 from the n counter and checks if the n counter is 0 or not at S.362. After one repetition of the above processing, n will be 7, so the processing returns to S.351 and CLK is set to "L" again. With this processing, the data output of bit 1 will be carried out.

When this processing repeated eight times, the judgment at S.361 will be YES, and then sub CPU outputs 8 bits of serial data. The sub CPU finishes this serial I/O processing and returns to the main flow to continue processing.

$F_{OUT}$ = 0, that is sub CPU, inputs the serial data, the processing skips S.363, S.354 and S.355 and goes to S.356, S.358 to S.362. At S.362, bit (8-n) of the serial input data is set to 0, and whether SIOA is "L" or not is checked at S.363. When SIOA is L, bit (8-n) of the serial input data is changed to 1 at S.364 and the processing goes to S.359. When SIOA is H, bit (8-n) is left as 0 and the processing goes to S.359.

For the case of input, the same as with output, the above processing will be repeated eight times until n = 0 and an 8-bit serial signal will be input to the sub CPU.

When the processing returns to the main flow of the sub CPU, the SPH pulse NO.1 output from main CPU 100 will be checked at S.303.

Sub CPU 200 measures the distance to the subject by controlling the distance measurement unit 24 at S.304, and outputs the distance measurement data AFDATA as (2)SS according to the above serial I/O flow synchronized with (2) CLK.

Next, sub CPU 200 measures the brightness of the subject with the output of CdS cell 23 at S.306, and also outputs brightness data BvDATA as (3)SS synchronized with (3) CLK at S.307.

At S.308, sub CPU 200 checks the SPH pulse NO.3.

Sub CPU 200 outputs (4) CLK at S.309 and also inputs lens latch data LLDATA which is output from main CPU 100 as (4)SA. It also outputs (5) CLK at S.310 and inputs the exposure data AEDATA which is output from main CPU 100 as (5)SA. Moreover, it outputs (6)CLK at S.311 and inputs Flashmatic data FMDATA which is output from main CPU 100 as (6)SA.

At S.312, shutter speed or diaphragm data is set according to the above AEDATA or FMDATA and the processing goes to "C".

At S.313, SPH pulse NO.6 is checked.

At S.314, sub CPU 200 outputs (7)CLK and inputs (7)SA which is output from main CPU 100. (7)SA is transferred as command ANUL until the release switch is turned ON, and when the release switch is ON, command REL is superimposed. At S.315, the processing repeats between S.313 and S.315 while waiting for that this command REL is superimposed.

When the command REL is transferred, sub CPU 200 outputs command RLEXC to (8)SS as well as (8)-CLK at S.316, and moves out the lens to the focal position at S.317 according to the transferred lens latch data, and carries out the exposure control at S.318.

After this, sub CPU 200 moves back the lens to the initial position at S.319, and outputs the winding required command WIND as to (9)SS as well as (9)CLK at S.310.

Finally, sub CPU 200 turns OFF the power hold at S.321 to finish the processing.

Next, an explanation of a monitor to check the camera is given.

<Monitor unit>

The monitor unit is constructed with a data reading circuit which is equipped with terminals to connect to each of the SPH, SIOA SIOS and CLK contacts, and a display section such as a CRT, etc. which displays data through connection to the reading circuit. In checking the camera, by connecting each terminal to the camera contacts, data output from the camera can be monitored by operating the camera as when taking a photograph.

The leading edge of CLK shown in Fig. 22 is the point of the timing to read the data.

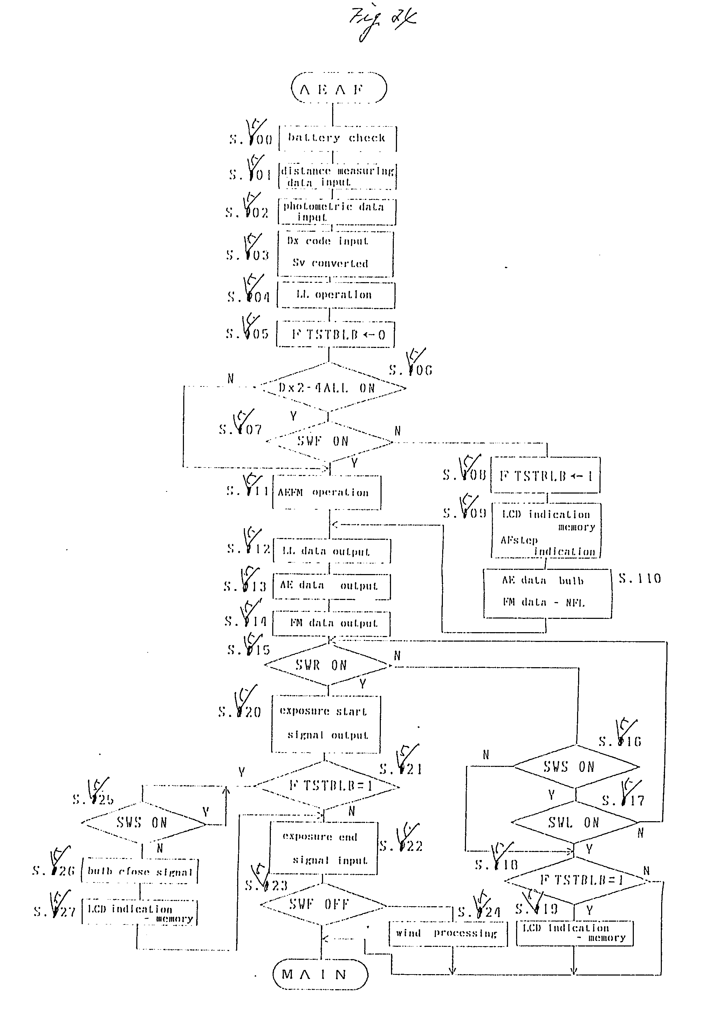

Fig. 23 is a flow chart showing the operation of this monitor.

When processing starts, monitor unit clears counter C which counts and displays the number of times reading data is communicated at S.400, and counter E is set to 8 to specify the number of times serial data is to be read.

At S.401, whether SPH is "H" or not is checked. When it is set of "H", the 50 ms timer will start at S.402 and whether SPH is "H" or not is checked again at S.403. When it is "H", if the time is up or not is checked at S.40, and then if SPH is "H" for 50 ms, processing will wait for SPH to become "L" at S.405.

When SPH is "L" from the beginning, or if it is set to "L" during 50 ms, the processing returns to S.401 again to continue the process. This processing is carried out to avoid the unit starting processing by SPH pulses generated intermittently when the photometric switch is turned ON and OFF continuously. If the processing was started with a SPH pulse, data could not be read from (1) in order, and also the data which is read could not be judged, which can lead to mistakes in judgment.

When it is judged that the shutter button has not been pressed at S.404, processing in the camera starts by turning ON the photometric switch at S.405, and the processing waits for SPH to be set to "L".

When SPH is set to "L", the processing is suspended for 10 ms at S.406 to avoid noise interfering with SIOS and CLK. The display on the CRT screen will disappear at S.407.

At S.408, register A which stores the SA signal and register B which stores the SS signal are cleared, and counter D which counts down the SA and SS signals 1 bit at a time is set to 8.

At. S.409, whether CLK is "L" or not is checked. When it is "L", processing goes to "E" which will be described later. When it is "H", whether SPH is "L" or not is checked at S.410, and when it is "L", that is when the power of sub CPU is not switched off, the processing returns to judgment at S.409 and S.410 until CLK is set to "L".

When SPH is judged to be "H" at S.410, counter F is set to 20 at S.411. After being suspended for 500 s at S.412, SPH is checked again to see if it is "L" or not at S.413. When the result is "H", 1 is subtracted from counter F at S.414 and whether counter F is set to 0 or not is checked at S.415. When the processing detects that SPH is "H" for more than 10 ms that is 20 times at an interval of 500 $\mu$s, it judges that the photographer has released a finger from the shutter button, so it returns to "D". By this processing, even if SPH is "H", the processing continues when the SPH pulse is superimposed.

Now, when CLK is judged to be "L" at S.409, the data reading unit judges that the clock output for data transfer is started, and waits for CLK to be initialized and is set to "H" at S.416, and when CLK is set to "H", it inputs SIOA and SIOS from the lowest bit at S.417.

At. S.418 and S.419, the logical sums of input SA signal and bit 0 of register A, and SS signal and 0 bit 0 of register B are stored as the 0 bit of each register.

At S.420 and S.421, the data of each bit of the counter is shifted to the right by one digit. By repeating this operation for 8 bits, data which is input as serial data can be stored in each register.

At S.422, 1 is subtracted from counter D and whether counter D is set to 0 or not is checked at S.423. This counter D is set to 0 after all serial signal for 8 bits are read.

When not all 8 bits of data have not been read, the processing waits for CLK to be set to "L" at S.424, and when it is set to "L", the processing between S.416 and S.423 is repeated.

When counter D is set to 0, 1 is added to counter C at S.425, and, for example, counter C (communication times), register A (SIOS) or register B (SIOS) can be displayed on the CRT screen.

At S.427, 1 is subtracted from counter E and whether it is set to 0 or not is checked at S.428. When data specifying the number at S.400 has been read completely, the processing returns to "D" again. When data is being read, the processing loops to "F" to continue the process.

In this case, the 8 serial data items corresponding to (1)CLK to (8)CLK of camera for SIOA and SIOS are read and finally displayed.

As described earlier, this camera need not transfer data, but it outputs essential data to judge the condition of the camera to the interval of data transfer with respect to timing, therefore, without special controls, any data can be read by the simple monitor unit described above and operations for each check can be done easily.

As has been described, according to the second inspection system, a data requiring transfer and a data requiring no transfer can be easily monitored by taking such data from signal lines of the camera with no extra control.

Also, with the arrangement for generating the type of errors in the electronic control system, operation abnormalities can be exactly classified to facilitate repairing failure products.

Third Inspection System

The above camera has the third inspection system addition to the above two systems.

Fig. 26 is an "AEAF" diverges from S21 of the Main Flow of Figs. 6 and 16. It should be noted that only one "AEAF" flow is executed in the above camera 300, and the flow chart illustrated in Fig. 24 is to disclose the instructions relating to the third inspection system third inspection system while Fig. 17 is to disclose those relating to the second inspection system.

In this system, when the Dx code printed on the film cassette of the loaded film is ISO 3200 and the film switch SWF is ON, that is when a film is not pulled out of the cartridge, the processing judges it as the test mode and displays the AF step based on the distance measurement data on the LCD panel. The LCD panel does not display the focal length or film numbers in the normal mode which is not included in the test mode.

When the processing starts, first, whether the battery voltage is sufficient to continue processing or not is checked at S.500. When the voltage is more than the specified value, distance measurement data based on the detected results of the AF unit is input at S.501. The distance measurement data is converted to one of 36 AF steps, from 0.5 m to infinity.

Next, at S.502, the photometric data based on the output of the photometric CdS cell which measured the brightness of the subject is input.

at S.503, main CPU 100 reads the Dx code of the film cartridge loaded when the Dx contact is connected nd recognizes the code as the film ISO sensitivity according to Table 1 and also converts it into a film sensitivity value Sv (apex display).

At S.504, LL (Lens Latch) calculation to acquire the amount of lens movement is carried out according to the AF step which is determined to correspond to the distance measurement data. The AF step is decided in unequivocally according to the distance measurement data, however, for the same AF step, the value of the lens latch will be different when the taking lens is in the normal mode or the macro mode, so it is decided after considering this information.

At S.505, test flag $F_{TSTBLB}$ which shows the processing is in the test mode is cleared.

At S.506, whether the input Dx code input at S.503 corresponds to ISO 3200, that is if all Dx contacts were turned ON, or not is checked.

At S.506, when an ISO 3200 film cartridge is judged to be loaded, whether film switch SWF is OFF or not is checked at S.507. When this switch is ON, that is when film is not pulled out of the cartridge, test flag $F_{TSTBLB}$ is set at S.508, and the presently displayed data on the LCD panel is stored in memory as backup data, and the AF step is displayed as the distance measurement data.

The above two conditions are required for processing to go to the test mode, however, ISO 3200 film is rarely used by users of the compact camera explained in this example, and even when they use it, the film has to be pulled out. In this case the test mode won't be set, so there is no chance of the test function interfering with taking photographs.

In testing, whether the operation of the photometric unit is normal or not can be checked easily by simply preparing an ISO 3200 film cartridge.

At S.510, AE data to control the shutter speed is set to the bulb exposure mode and the Flashmatic (FM) data is set to NFL which inhibits the flash. The bulb exposure mode is is to open the shutter when the shutter button is pressed and to close it when the shutter button is released.

When an ISO 3200 film cartridge is not loaded or a film cassette other than ISO 3200 is loaded at S.506, AEFM calculation processing will be carried out at S.511 without any judgment at S.507.

Also, even if an ISO 3200 film cartridge is loaded, when the film is pulled out, the test mode does not start and AEFM processing will be carried out.

When the exposure value is sufficient and does not required strobe emission, the shutter speed and diaphragm value are determined according to the AE calculation at S.511.

Main CPU 100 transfers LL data, AE data and FM data calculated at S.512, S.513 and S.514 to sub CPU 200.

At S.515, whether release switch SWR is ON, whether photometric switch SWS is ON at S516 and whether lock switch SWL is ON at S517 are checked. Then, when the photometric switch is ON and the lock switch is OFF, the processing goes in the loop between S.515 and S.517 until the release switch is turned ON. When the release switch is turned ON, the exposure start signal is output to sub CPU 200 at S.520.

When the photometric switch is OFF and the lock switch is ON, whether test flag $F_{TSTBLB}$ is 1 or not is checked at S.518. When it is in the test mode, at S.519, the LCD panel display is changed over from the AF step to the normal display which is held in memory. When it is not in the test mode, the processing skips S.519 and goes to the main flow.

When release switch SWR is turned ON while photometric switch SWS is ON and lock switch SWL is OFF, main CPU 100 outputs an exposure start signal to sub CPU 200 at S.520. When this signal is input to sub CPU 200, sub CPU 200 moves the lens to the focus position according to the LL data, and controls the diaphragm and shutter speed according to the AE data, or controls the diaphragm and strobe according to the FM data and opens the shutter.

At S.521, whether test flag $F_{TSTBLB}$ is 1 or not is checked. When this flag is 0, main CPU 100 inputs the exposure end signal at S.522 and checks if film is pulled out at S.523. When the film is pulled out, winding to wind the film by one frame is carried out at S.524.

Also, a detailed explanation of this winding process will not be given, however, when the winding is completed correctly, the processing goes to the main flow, and when the winding is not completed in the schedules time, the processing for winding will be carried out.

Now, when the test flag $F_{TSTBLB}$ is 1 at S.521, that is when the processing is in the test mode, the judgment at S.525 is repeated until photometric switch SWS is turned OFF. During this processing, the shutter is in the open position. Therefore, by opening the rear cover and positioning the frosted glass at the aperture, you can see the picture directly.

When you release your finger from the shutter button, the bulb close signal is output at S.526, and the LCD panel display is changed over to the information backed up in the memory, and the processing goes to S.522.

That is the end of the explanation of the example. In the above example, the distance measurement unit is only described concerning the distance measuring method, however, some other methods can be used; for example, displaying photometric unit data which measures the brightness of the subject can be described.

As has been described above, according to the third inspection system, measurement data such as light intensity and distance measured can be easily monitored by setting a test mode as part of normal operation of the camera with no need of using an external inspection unit etc.

Furthermore, since the test mode is entered in dependence on the state of Dx code and film switch watched, testing can be accomplished without disturbing the user in photographing.

## Claims

1. An electronically controlled camera comprising:
control means for controlling camera function;
input means for a inputting a control signal to said control means; and
terminal means, to which an external controller is connected for inputting an external control signal to said control means;
wherein said control means disables said input means when said external control signal is input through said terminal means and controls said camera function in accordance with said external control signal via said control means.

2. The electronically controlled camera according to claim 1 wherein said camera function comprises at least one of automatic focusing, automatic exposure, automatic film loading, automatic film rewinding, zooming and photographing information indication.

3. The electronically controlled camera according to claim 1 or 2 wherein said input means comprises a shutter buttom.

4. The electronically controlled camera according to claim 1, 2 or 3 wherein said control means comprises first and second control units, a plurality of singnal lines being interconnected between said first and second control units, and wherein said terminal means comprises at least one electric terminal connected to one of said singal lines.

5. An electronically controlled camera comprising:
more than one control means;
more than one signal lines interconnected between said control means for data exchange; and
terminal means to which an external unit is connected, said terminal means being connected to one of said signal lines, wherein one of said control means sends at least one predetermined data to the other one of said control means through said one of the signal lines, said data being the data which is not required by said other one of the control means.

6. The electronically controlled camera according to claim 5 wherein s aid predetermined data comprises the data relating to kinds of errors occured in electronic control systems of the camera.

7. An electronically controlled camera comprising:
measuring means for measuring photographing data varying in dependence on external environments;
Dx code input means reading a Dx code provided on a film cartridge.
film detecting means for checking if a film is loaded with its front end drawn out of the film;
indicator means for visibly indicating said photographing data; and
control means for incicating said photographing data measured by said measuring means on said indicator means when said Dx code input means inputs a predetermined Dx code and said film detecting means detects that the film is not drawn out of the film catridge.

8. The electronically controlled camera according to claim 7 wherein daid photographing data measured by said measuring means comprises a subject-distance.

9. The electronically controlled camera according to claim 7 or 8 wherein said predetermined Dx code is the code for the film which is not employed in usual photographing.

10. The electronically controlled camera according to claim 7. 8 or 9 wherein said predetermined Dx code is the code for ISO 3200.

Fig. 1

24
21
SPH
CLK
22
23
SIOS
SIOA
11
27
26
25

Fig. 2
27
25
26
28a
27
28
28c
28b

28
28c
28a
28b
21
32
30
34
33
31
29

21
32
31
30
28c
28a
28
28b
34
33
Dx 1
Dx 2
Dx 3
Dx 4
37
38
35
36

Fig. 5
111
112
wind motor
zoom motor
110
motor drive circuit
120
date module
33, 34
green lamp
red lamp
32
LCD
22
strobe circuit
210
shutter
23
photometry
CdS
24
distance measurement
IRED
PSD
SPH SIOA TRG
PORT 5
PORT 4
Main CPU
PORT 7
PORT 6
PORT 3
PORT 2
PORT 1
PORT 0
SICS CLK
sub CPU
100
200
SWMode
SWW
SWT
SWS
POS
DX contact
SWR
SWWP
SWL
SWF
SWB
SWMacro
clock oscillator
101
battery check circuit
220
clock oscillator
201

Fig. 6

MAIN
switch data input
stored in memory
S. 1
Loop
switch data input
S. 2
S. 3
SWL ON?
Y
N
retracting
S. 4
POS=0?
N
Y
lens storing processing
S.5
LOCK
S. 6
SWM ON?
Y
N
S. 9
POS≥2?
Y
N
lens driving
projecting processing
S. 10
S. 11
POS≤C?
Y
N
retracting
lens withdrawing processing
S. 12
S. 13
SWW ON?
Y
N
S. 7
POS=Eн?
Y
S. 8
N
lens macro processing
MAIN
S. 14
wide end?
Y
N
S. 15
wide processing
MAIN
S. 16
SWT ON?
Y
N
S. 19
SWS = memory ?
N
Y
S. 20
SWS ON?
N
Y
AEAF
S. 21
1 ms timer start
S. 22
CLK=L
SIOA=L
SIOS=H ?
Y
N
S. 23
time up ?
N
Y
EXTERNAL CONTROL
S. 17
POS=C?
Y
N
S. 18
tele processing
MAIN
switch data stored in memory
S. 24
125msWAIT
S. 25
LOOP

Fig. 7
EXTERNAL CONTROL
S50
500μS WAIT
S51
CLK=L?
N
Y
MAIN
S52
SIOS=L
500μS WAIT
SIOS=H
S53
CLK=H?
N
Y
MAIN
S54
serial IN No 1
S55
SIN b7='1'?
Y
N
S60
SIN(H)=8H?
Y
N
S56
SIN No 1 stored in memory
S62
RAM READ
SOUT=RAM
S61
SOUT=PORT IN
S57
serial IN No 2
S58
1mS WAIT
S59
command code processing
S63
serial OUT
S66
EXCT END
S64
1mS WAIT
N
SIOS=H?
S65
Y

Fig. 8

Serial OUT
Serial IN
SOUT=FFH
S67
10 mS timer start
SIO start
S68
S69
time up?
Y
N
S70
SIO END?
N
Y
S72
SIO inhibited stack pointer clear
MAIN
100μS WAIT
SIO inhibited
S71
RET

Fig. 9
EXTCONTROL
Command Code Processing
SIN No1=?
S73
0001 XXXX
Y Shutter control
shutter test
S77
STEST=No1(b3-b0)
S78
STESTb1=1
N
Y
AEAF
S80
AEAF2
S79
1: NORMAL released
2: light and distance measuring test
3: exposure quantity test
4: pass release
S74
0010 XXXX
Y RAM WRITE
SIN No2(b7-b4)=C, D, E, F?
S81
LCD RAM?
Y
N
0H-BH
LCD
EH S83
S82
Add=No2(b7-b0)
(Add)=No1(b3-b0)
Add=1E+No2(b3-b0)
(Add)=No1(b3-b0)
EXCTEND
S75
0011 XXXX
Y Output control
b4=DTRG
b3=RLMP
b2=GLMP
b1=SPH
S84
SIN1 b3=1
N
Y
S85
S85' output data = SIN No 2 or EH
output to P4, P5
EXCTEND
S86
SIN No 2 b4 = 1
motor data = SIN No 2
S87
motor control
S88
SIOS=H
N
Y
S89
STOP&BLAKE
EXCTEND
S76
0100 XXXX
Y Operation control
SIN No1 (b3-b0)=?
S90
0000
Y
S91
MOVE POS
N
S92
0001
Y
S93
INIT POS
N
S94
0011
Y
S95
REW
N
S96
0100
Y
S97
LD
N
S98
0101
Y
S99
WD
N
EXCTEND
N
EXCTEND

Fig. 10
305
metering section of the image exposure meter
304
300
306
diffusion-surface luminous source
camera
light receiving section of the light exposure unit
303
prober unit
I/F circuit
302
controller
301
operation input keys
307

Fig. 11

Image Exposure Quantity Inspection
S100
START?
Y
N
S101
solenoid valve ON
S102
setting OK?
S103
camera connected to the power source
S104
F NG=0
S105
F CONT=1
SOUT1=40H
SOUT2=02H
MOVE POS (WIDE)
S106
camera control
S107
luminous source setting (Lv9)
S108
F CONT=1
SOUT1=20H
SOUT2=45H
RAM WRITE (MODE=AUTO)
S109
camera control
S110
F CONT=1
SOUT1=24H
SOUT2=4AH
RAM WRITE (Svb3-b0)
S111
camera control
S112
F CONT=1
SOUT1=21H
SOUT2=4BH
RAM WRITE (Svb7-b4)
S113
camera control
S114
F CONT=1
SOUT1=1EH
SOUT2=00H
exposure quantity inspection released
S115
camera control
S116
exposure quantity input
S117
standard checking
OK
NG
S118'
F NG=1
S118
S119
camera turned off
S120
solenoid valve ON
S121
set release completed
S122
F NG=0
S123
inspection result OK indicated
S124
inspection result NG indicated
Terminated

Fig. 12
Camera Control
F ERR=0
SOIS=H
CLK=L
S1061
1-second timer start
S1062
time up?
Y
S1063
N
SIOS=L?
S1064
Y
CLK=H
S1065
1 mS timer start
S1066
S1067
time up?
Y
S1065'
N
SIOS=H?
S1068
F ERR=1
RET
Y
500μs WAIT
S1069
F OUT=1
SDATA=SOUT1
S1070
SIO(No1)
S1071
1mS WAIT
S1072
F CONT=1?
S1073
S1077
F OUT=1
SDATA=SOUT2
S1074
F OUT=0
SIO(No2)
S1078
SIO(No2)
S1075
SIN=SDATA
S1079
SIOS=L
S1076
RET

Fig. 13
CLK
SIOS
H
L
H
L
0.5 ms
0.5ms
0.5ms

Fig 14
SIO
n=8
S2000
SIDS=H(0)
S2001
CLK=Low
S2002
F out=1?
S2003
SDATA bit(n-1)=1?
S2004
S2005
SIOS=1
SIOS=0
S2006
50 μsec Wait
S2007
CLK=Hi
S2008
F out=1?
S2009
S2010
SDATA bit(n-1)=0
S2011
SIOS=1?
S2012
SDATA bit(n-1)=1
50 μsec Wait
S2013
n=n-1
S2014
n=0?
S2015
Y
N

Fig. 15
Operation Check
S200
START?
Y
N
camera connected to power supply
1 sec. waited
S201
F ON=1
F CONT=1
S202
Add=F0H
S203
F ON=1
S204
turned on
turned off
S205
SOUT1=1FH
SOUT1=10H
S206
SOUT2=Add
S207
camera control
S208
F ERR=1
S209
END
S210
Add=Add+1
S211
CY=1
S212
500mS WAIT
F ON reversed
S213
END?
S214
NEXT?
S215
F ON=1
F CONT=1
S216
red lamp, green lamp
2Hz blinking
F ON=1
S217
S219
SOUT2=F3H
SOUT2=FFH
S218
SOUT1=38H
S220
camera control
S221
F ERR=1
S222
250mS WAIT
F ON reversed
S223
END?
S224
NEXT?
S225
A
S226
S227
SOUT2=0BH
S228
SOUT2=02H
S229
SOUT1=40H
S230
camera control
S231
S232
1 sec. waited
F ON reversed
S233
S234
S235
F ON=1
F CONT=1
S236
S237
S238
forward
reverse
SOUT2=73H
SOUT2=D9H
S239
SOUT1=30H
S240
S241
S242
2 sec. waited
FON reverse
S243
S244
S254
turn off the camera power
Terminated

Fig. 16

MAIN
S.1 switch data stored in memory
Loop
S.2 switch data input
S.3 SWL ON? Y N
S.4 POS=0? N Y
S.5 lens storage position
LOCK
S.6 SWM ON? Y N
S.7 POS=Eu? Y N
S.8 lens macro processing
MAIN
S.9 POS≥2? Y N
S.10 lens ~~extending~~ drive processing
S.11 POS≠C? Y N
S.12 lens ~~withdrawn~~ retracting position
S.13 SWW ON? Y N
S.14 wide end Y N
S.15 wide processing
MAIN
S.16 SWT ON? Y N
S.17 POS=C? Y N
S.18 tele processing
MAIN
S.19 SWS = memory ? N Y
S.20 SWS ON? N Y
AFAE
S.21 FCHGRQ=1 Y N
S.22 charge
S.23 charge terminated NG OK
error processing
S.24 FCHGRQ → 0
S.25 switch data stored in memory
S.26 125msWAIT
Loop

Fig. 17

AEAF
S.50
SPH → L
10msWAIT
S.51
SIOS. L
N
Y
S.52
serial I/O
①
S.53
battery OK
N
Y
S.55
SPH pulse No.1
S.56
Dx input Sv converted
S.57
Pos input, α# converted
S.54
SPH → H
error processing
serial I/O
②
S.58
LL operation
S.59
serial I/O
③
S.60
AEFM calculation
S.61
S.62
FCHGRQ = 1
Y
N
SPH pulse No. 3
S.64
S.63
SPH → H
MAIN
A
A
S.65
serial I/O
④
S.66
serial I/O
⑤
S.67
serial I/O
⑥
S.68
SW input
S.69
SWR ON
Y
N
S.70
SWS ON
N
Y
S.71
SWL ON
Y
N
S.72
S.73
SPH pulse NO.
⑦
serial I/O
S.74
SPH → H
MAIN
S.75
SPH pulse NO.6
S.76
serial I/O
⑦
S.77
serial I/O
⑧
S.78
⑧SS=RLEXC
N
Y
S.79
strobe flash?
N
Y
S.80
FCHGRQ → 1
S.81
serial I/O
⑨
S.82
⑨SS=WIND
S.83
SPH → H
error processing
S.84
SPH → H
S.85
number of film count
frame
WIND

Fig. 18

MAIN CPU
SERIAL I/O
S.90
output data set to serial output register
S.91
serial I/O permitted
S.92
SIOA ← H
S.93
terminated
N
Y
S.94
serial I/O prohibited
100 μs Wait
SIOA ← L
RETURN

SUB CPU
MAIN FLOW
Fig. 19
S100
PH ON
S:OS ← L
S101
battery check
S102
serial I/O(OUT)
①
S103
SPH pulse NO.1 check
S104
distance measurement
S105
serial I/O (OUT)
②
S106
light measurement
S107
serial I/O (OUT)
③
S108
SPH pulse NO.3 check
S109
serial I/O (IN)
④
S110
serial I/O(IN)
⑤
S111
serial I/O(IN)
⑥
S112
Ev data set
C
C
S113
SPH pulse NO.6 check
S114
serial I/O (IN)
⑦
S115
⑦ SA=REL
N
Y
S116
serial I/O (OUT)
⑧
S117
lens extended
S118
exposure
S119
lens retracted
S120
serial I/O (OUT)
⑨
S121
PH OFF
END

Fig. 20

SUB CPU SERIAL I/O

S.150 n ← 8

S.151 CLK ← L

S.152 Fout = 1 ? (N / Y)

S.153 SDATA bit (8-n) = 1 ? (Y / N)

S.154 SIOS ← L

S.155 SIOS ← H

S.156 50 μsec Wait

S.157 CLK ← H

S.158 Fout = 1? (N / Y)

S.162 SDATA bit (8-n) ← 0

S.163 SIOA = H ? (N / Y)

S.164 SDATA bit(8-n) ← 1

S.159 50 μsec Wait

S.160 n ← n - 1

S.161 n = 0 ? (N / Y)

RET

Fig. 21
SPH
CLK
SIOA
SIOS
NO.1
NO.3
NO.6
NO.6
NO.6
①
②
③
④
⑤
⑥
⑦
⑦
⑦
⑧
⑨
Fig. 22
CLK
SIOA
SIOS

MONITOR

- D
- S.400 C←0, E←8
- S.401 SPH=H? (N → S.401; Y →)
- S.402 50ms timer start
- S.403 SPH=H? (N → S.401; Y →)
- S.404 50ms time up? (N → S.403; Y →)
- S.405 SPH=L ? (N → S.405; Y →)
- S.406 10ms WAIT
- S.407 CRT indication off
- F
- S.408 A←0, B←0, D←8
- S.409 CLK=L ? (Y → E; N →)
- S.410 SPH=L ? (Y → S.409; N →)
- S.411 F←20
- S.412 500μs WAIT
- S.413 SPH=L? (Y → S.409; N →)
- S.414 F←F-1
- S.415 F=0 ? (N → S.411; Y → D)

- E
- S.416 CLK=H? (N → S.416; Y →)
- S.417 SIOA, SIOS input
- S.418 A←A·SIOA
- S.419 B←B·SIOS
- S.420 ⊂A⊃
- S.421 ⊂B⊃
- S.422 D←D-1
- S.423 D=0 ? (Y → S.425; N →)
- S.424 CLK=L ? (N → S.424; Y → S.416)
- S.425 C←C+1
- S.426 CRT indication C(freq. of communications) A(SIOA data) B(SIOS data)
- S.427 E←E-1
- S.428 E=0 ? (N → F; Y → D)

Fig 24

AEAF
S.100 battery check
S.101 distance measuring data input
S.102 photometric data input
S.103 Dx code input Sv converted
S.104 LL operation
S.105 F TSTBLB ←0
S.106 Dx2-4ALL ON
N
Y
S.107 SWF ON
N
Y
S.108 F TSTBLB ←1
S.109 LCD indication memory AFstep indication
S.110 AE data bulb FM data - NFL
S.111 AEFM operation
S.112 LL data output
S.113 AE data output
S.114 FM data output
S.115 SWR ON
N
Y
S.120 exposure start signal output
S.121 F TSTBLB=1
Y
N
S.116 SWS ON
S.117 SWL ON
S.118 F TSTBLB=1
S.119 LCD indication - memory
S.125 SWS ON
S.126 bulb close signal
S.127 LCD indication - memory
S.122 exposure end signal input
S.123 SWF OFF
S.124 wind processing
MAIN